# EUROPEAN PATENT SPECIFICATION

(11) **EP 3 731 065 B1**
(45) Date of publication and mention of the grant of the patent: **08.03.2023**
(21) Application number: 18890126.8
(22) Date of filing: 05.12.2018
(51) Int. Cl.: G06F 3/01, A63F 13/285, G09B 21/00

(54) **INFORMATION PROCESSING DEVICE AND METHOD, AND PROGRAM**
INFORMATIONSVERARBEITUNGSVORRICHTUNG UND -VERFAHREN UND PROGRAMM
PROGRAMME, PROCÉDÉ ET DISPOSITIF DE TRAITEMENT D'INFORMATIONS

(30) Priority: 19.12.2017 JP 2017242424
(43) Date of publication of application: 28.10.2020
(73) Proprietor: Sony Group Corporation, Tokyo 108-0075 (JP)
(72) Inventor: YOKOYAMA Ryo, Tokyo 108-0075 (JP); OGITA Takeshi, Tokyo 108-0075 (JP)
(74) Representative: MFG Patentanwälte Meyer-Wildhagen Meggle-Freund Gerhard PartG mbB
(86) International application number: PCT/JP2018/044639
(87) International publication number: WO 2019/124068

(56) References cited:
- EP-A1- 3 483 701
- WO-A1-2007/105937
- WO-A1-2016/159261
- WO-A1-2017/043610
- JP-A- 2011 115 936
- JP-A- 2012 007 946
- JP-A- 2015 191 423
- US-A1- 2013 218 456
- US-A1- 2016 299 526
- US-A1- 2017 003 139

## Description

### TECHNICAL FIELD

The present technology relates to an information processing apparatus, an information processing method, and a program as set out in the appended set of claims.

### BACKGROUND ART

Conventionally, there has been proposed a technology in which a device having a plurality of vibrating units is wrapped around a predetermined body part of a user, and some of the plurality of vibrating units arranged on a circumference are vibrated to make the user recognize a direction (for example, see Patent Document 1).

For example, in the PCT Japanese Translation Patent Publication No. 2013-524315, a C-shaped apparatus is wrapped around a neck portion of a user, and a vibrating unit provided in this apparatus is vibrated to perform tactile presentation by vibration stimulation, whereby a direction is presented.

In Patent Literature US 2017/003139 A1 it is disclosed a wearable navigation device, comprising a band portion positioned at a portion of a human body; a location device that receives navigation data regarding a destination location for an item and determines a distance and orientation with respect to a current position of the wearable navigation device to the destination location; and a plurality of tactile feedback emitters that provide tactile feedback to the portion of the human body in a predetermined sequential order to direct a wearer of the band portion to the destination location having a point of intersection of a length, width, and height.

In Patent Literature WO 2017/043610 A1 it is disclosed an information processing apparatus including: a correction vibration data generating unit that generates, on the basis of information from a sensing unit that senses the contact state of a vibration device provided with a vibrator, correction information for correcting the intensity in vibration data regarding the vibration device; and a vibration signal generating unit that generates a vibration signal from the vibration data corrected on the basis of the correction information.

In Patent Literature JP 2015 191423 A it is disclosed a control part that specifies a predetermined object to be displayed on a display part (curved-face display device 120) that cannot be visually recognized in its entirety at a time, and notifies a user of the position of the specified object located on the outside of a display area that can be visually recognized by the user at a time in the display part.

In Patent Literature JP 2011 115936 A it is disclosed a robot with tactile sense display which includes a robot body and a belt for fitting the robot body onto a user.

In Patent Literature JP 2012 007946 A it is disclosed a user terminal device which includes direction detection means for detecting a direction.

In Patent Literature WO 2007/105937 A1 it is disclosed a tactile device comprising a plurality of actuators for producing navigation instructions.

In Patent Literature WO 2016/159261 A1 it is disclosed to make a user reliably acquire navigation information that is being presented to the user.

In Patent Literature US 2013/218456 A1 it is disclosed a wearable tactile navigation system which frees one from requiring to use one's eyes as there is no display, all positional information is conveyed via touch. As a compass, the device nudges one towards North.

In Patent Literature US 2016/299526 A1 it is disclosed an attachable article or device, such as a wristband, which includes a flexible electronic display disposed thereon in a manner that is bendable or conformable to a user's wrist or other curved surface, and that enables various images to be displayed on the electronic display in a manner that is easily viewable to the user.

In Patent Literature EP 3 483 701 A1 it is disclosed an information processing device including: an output control unit configured to control output of a tactile stimulus to at least two tactile stimulus units.

### SUMMARY OF THE INVENTION

### PROBLEMS TO BE SOLVED BY THE INVENTION

However, in the above-described technology, there has been a case where the tactile presentation cannot always be performed accurately.

For example, in a case where a device having a vibrating unit is worn on a body part of a user, the thickness of the part varies from user to user.

Therefore, depending on the thickness of the body part of the user on which the device is worn and the degree of tightening at the time of wearing the device, the contact position of the vibrating unit provided on the device with respect to the user's body is sometimes given as a position different from a contact position presumed in advance. When such a deviation in the contact position of the vibrating unit is produced, the presentation position of the tactile presentation that makes the user perceive that the tactile presentation by vibration stimulation is being performed changes. In consequence, for example, the user is made to recognize a position or direction different from the intended position or direction as a result.

The present technology has been made in view of such a situation and is intended to enable more accurate tactile presentation.

### SOLUTIONS TO PROBLEMS

According to the present disclosure, there is provided an information processing apparatus, an information processing method and a computer program as defined in the appended set of claims.

An information processing apparatus according to one aspect of the present technology includes: an estimating unit that estimates a wearing state of a plurality of tactile presentation devices arranged at mutually different positions, with respect to a body of a user; and a tactile presentation control unit that, on the basis of tactile presentation position information indicating a tactile presentation position with respect to the body of the user, and an estimation result for the wearing state, controls at least one of the tactile presentation devices among the plurality of tactile presentation devices such that the user perceives a tactile sensation at the tactile presentation position.

An information process and a program according to one aspect of the present technology includes: a step of estimating a wearing state of a plurality of tactile presentation devices arranged at mutually different positions, with respect to a body of a user; and a step of, on the basis of tactile presentation position information indicating a tactile presentation position with respect to the body of the user, and an estimation result for the wearing state, controlling at least one of the tactile presentation devices among the plurality of tactile presentation devices such that the user perceives a tactile sensation at the tactile presentation position.

In one aspect of the present technology, a wearing state of a plurality of tactile presentation devices arranged at mutually different positions, with respect to a body of a user is estimated, and on the basis of tactile presentation position information indicating a tactile presentation position with respect to the body of the user, and an estimation result for the wearing state, at least one of the tactile presentation devices among the plurality of tactile presentation devices is controlled such that the user perceives a tactile sensation at the tactile presentation position.

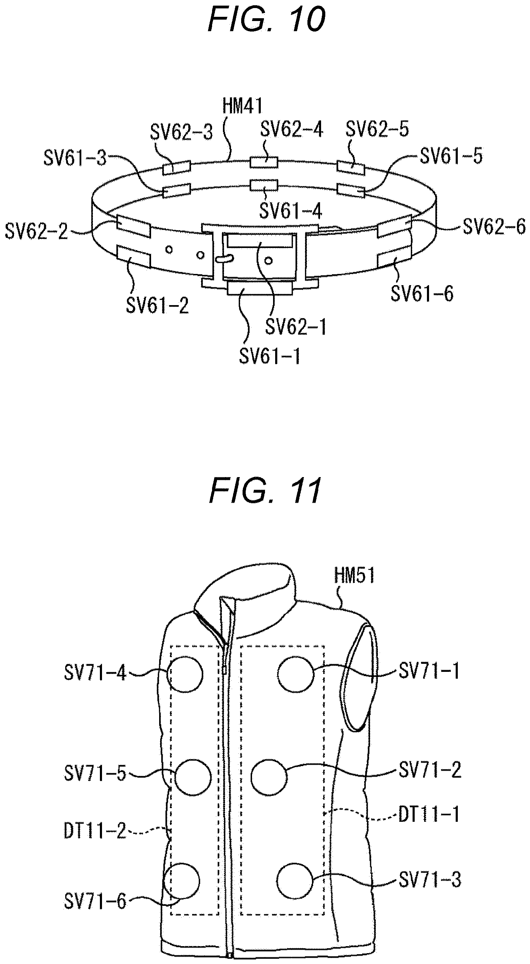

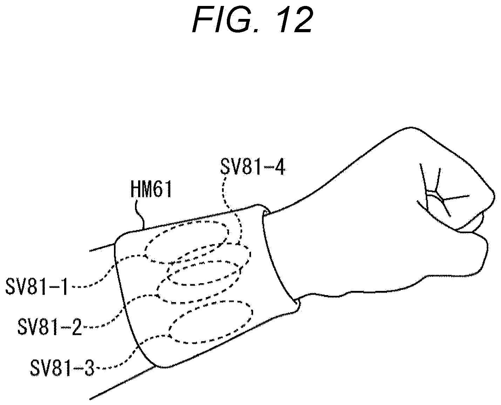

The embodiments described in figures 11 and 12 and the respective passages of the description do not form part of the present invention and are provided only as illustrative examples.

### EFFECTS OF THE INVENTION

According to one aspect of the present technology, more accurate tactile presentation can be performed.

Note that, the effects described herein are not necessarily limited and any effects described in the present disclosure may be applied.

### BRIEF DESCRIPTION OF DRAWINGS

Fig. 1 is a diagram for explaining a deviation in a presentation direction.
Fig. 2 is a diagram illustrating a configuration example of an external appearance of a tactile presentation apparatus.
Fig. 3 is a diagram for explaining direction presentation.
Fig. 4 is a diagram for explaining direction presentation.
Fig. 5 is a diagram for explaining direction presentation for a plurality of target objects.
Fig. 6 is a diagram for explaining direction presentation between tactile presentation apparatuses.
Fig. 7 is a diagram for explaining a calibration process.
Fig. 8 is a diagram for explaining presentation of a distance to a target object.
Fig. 9 is a diagram for explaining correction according to perceptual characteristics.
Fig. 10 is a diagram illustrating a configuration example of another external appearance of the tactile presentation apparatus.
Fig. 11 is a diagram illustrating an example of apparatus, not part of the invention.
Fig. 12 is a diagram illustrating an example apparatus, not part of the invention.
Fig. 13 is a diagram illustrating a functional configuration example of the tactile presentation apparatus.
Fig. 14 is a flowchart for explaining the calibration process.
Fig. 15 is a flowchart for explaining a presentation process.
Fig. 16 is a diagram illustrating a configuration example of an information processing system.
Fig. 17 is a diagram illustrating a configuration example of a computer.

### MODE FOR CARRYING OUT THE INVENTION

Hereinafter, embodiments to which the present technology is applied will be described with reference to the drawings.

### <First Embodiment>

### <About Present Technology>

The present technology is designed to perform tactile presentation to a user using one or a plurality of tactile presentation devices to perform direction presentation that makes the user recognize a predetermined direction.

Here, the tactile presentation is to make the body of a user perceive a predetermined perceptual effect utilizing a tactile sensation through the user's skin by, for example, vibration stimulation, temperature stimulation, electrical stimulation, force stimulation, or pain stimulation on the skin or muscles or the like.

For example, as a device that performs direction presentation to which the present technology is applied, a device of a type that is wrapped around a portion of the user's body when worn, such as a belt-type device and the like are conceivable.

Such devices can be used for implementing, for example, various navigation functions that allow the user to recognize the direction of the target object and the distance to the target object by tactile presentation, communication functions utilizing direction presentation, various notification functions utilizing direction presentation, and a lost object detection function relating to a notification or the like of falling of the property of the user or a misplaced item of the user.

Specifically, for example, the present technology can be used in the case of, during a battle of a survival game or the like, making a direction in which another user such as an opponent or an ally is located or a distance to another user be recognized by tactile presentation. Furthermore, for example, the present technology can also be used in the case of making the user recognize feedback utilizing the tactile presentation, such as a bullet being hit, during a battle of a survival game or the like.

Moreover, the present technology can also be used, for example, in the case of making a user walking while heading to a preset destination recognize the direction of the destination as viewed from the user by tactile presentation and the distance to the destination by tactile presentation.

Besides, the present technology can also be used, for example, in the case of, when the user is driving a vehicle, making the direction and number of vehicles and people around the user, and the distance to those vehicles and people as viewed from the user be recognized.

Then, hereinafter, the present technology will be described more specifically. Note that, in the following, description will be continued taking as an example a case where, in particular, tactile presentation by vibration stimulation is performed as tactile presentation.

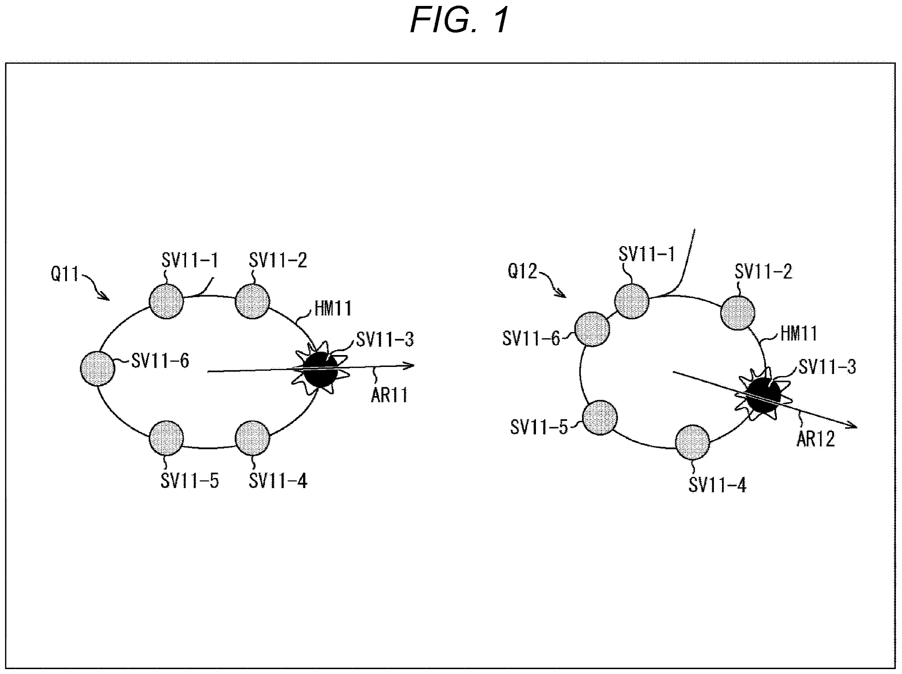

For example, as illustrated in Fig. 1, a belt-type tactile presentation apparatus HM11 with a direction presentation function, which is wrapped around a waist portion of the user's body when worn, is assumed.

The tactile presentation apparatus HM11 is provided with tactile presentation units SV11-1 to SV11-6 that perform tactile presentation by vibration stimulation. Note that, hereinafter, in a case where there is no need to particularly distinguish the tactile presentation units SV11-1 to SV11-6, the tactile presentation units SV11-1 to SV11-6 will be also simply referred to as tactile presentation units SV11.

By performing tactile presentation by vibrating any of these tactile presentation units SV11, the tactile presentation apparatus HM11 performs direction presentation that makes a user recognize (perceive) a direction in which a target object to be recognized is located.

Here, the six tactile presentation units SV11 are arranged so as to be placed in order at equal intervals on a circumference as indicated by an arrow Q11 when the user wears the tactile presentation apparatus HM11 on a waist portion, and such a state is assumed as the originally presumed wearing state of the tactile presentation apparatus HM11.

In this case, for example, assuming that the target object is located in a direction indicated by an arrow AR11, that is, in a right direction as viewed from the user, the tactile presentation apparatus HM11 causes the tactile presentation unit SV11-3 provided in a direction in which the target object is located as viewed from the tactile presentation apparatus HM11 to vibrate, thereby performing the direction presentation.

When the tactile presentation unit SV11-3 is vibrated, the user perceives the vibration stimulation on his/her waist portion on the right side, that is, a portion in contact with the tactile presentation unit SV11-3, and thus can know that the target object is located in a direction indicated by the arrow AR11 in which the portion having received the vibration stimulation is located.

However, the tactile presentation apparatus HM11 is a belt-type device that is wrapped around the user's waist when worn, and the thickness of the whole waist of the user varies from person to person; accordingly, the contact position between each tactile presentation unit SV11 and the user changes depending on the degree of tightening when the tactile presentation apparatus HM11 is wrapped.

For example, as indicated by an arrow Q12, if the degree of tightening is stronger than normally presumed, the tactile presentation units SV11 will no longer be arranged at equal intervals on a circumference. In other words, the arrangement position of each tactile presentation unit SV11 is given as a position deviated from the originally presumed position.

Therefore, assuming that the target object is located in the same direction as the example indicated by the arrow Q11, the tactile presentation apparatus HM11 performs the direction presentation by vibrating the tactile presentation unit SV11-3; in the wearing state indicated by the arrow Q12, however, the direction recognized by the direction presentation is given as a direction indicated by an arrow AR12, which is different from the direction indicated by the arrow AR11, which is originally expected to be recognized.

In a case where the tactile presentation apparatus HM11 is, for example, wrapped around a portion of the body of the user to be worn as described above, it has been difficult to exactly perform the direction presentation because there is an individual difference in the thickness of the wearing portion.

Thus, in the present technology, by estimating the wearing state of each tactile presentation unit and performing tactile presentation control on the basis of the result of the estimation, the tactile presentation for the exact tactile presentation position as originally intended is enabled.

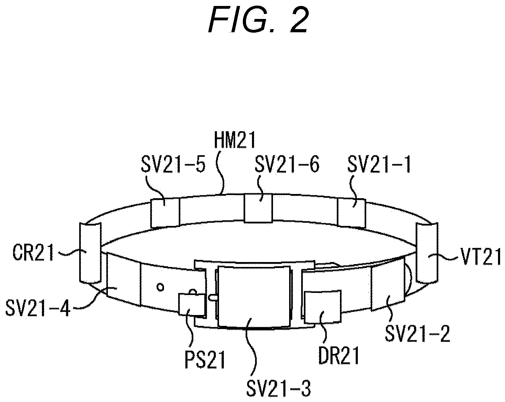

For example, it is assumed that the present technology is applied to a belt-type tactile presentation apparatus with a direction presentation function, which is wrapped around a waist portion of the user's body when worn. Fig. 2 is a diagram illustrating a configuration example of an external appearance of a tactile presentation apparatus to which the present technology is applied in such a case.

The tactile presentation apparatus HM21 illustrated in Fig. 2 is a belt-type device that is wrapped around a waist portion of the user when worn. A band portion of a belt constituting this tactile presentation apparatus HM21 is provided with tactile presentation units SV21-1 to SV21-6 at substantially equal intervals such that the tactile presentation units SV21-1 to SV21-6 come into contact with respective parts of the user's waist when the tactile presentation apparatus HM21 is worn.

These tactile presentation units SV21-1 to SV21-6 are formed by, for example, piezo element actuators, and vibrate on the basis of a supplied tactile signal to perform tactile presentation to the user by vibration stimulation.

Note that, hereinafter, in a case where there is no need to particularly distinguish the tactile presentation units SV21-1 to SV21-6, the tactile presentation units SV21-1 to SV21-6 will be also simply referred to as tactile presentation units SV21.

Furthermore, the tactile presentation apparatus HM21 is provided with a battery VT21 for supplying electric power to each unit of the tactile presentation apparatus HM21, and a communication module CR21 that communicates with another tactile presentation apparatus or a server or the like.

Moreover, the tactile presentation apparatus HM21 is also provided with, for example, a position measuring unit PS21 formed by a global positioning system (GPS) or the like to measure the own position of the tactile presentation apparatus HM21 in a three-dimensional space, and a direction measuring unit DR21 that is formed by a 9-axis sensor or the like and measures an own direction in which the tactile presentation apparatus HM21 is facing in a three-dimensional space.

In such a tactile presentation apparatus HM21, for example, the communication module CR21 communicates with an external server or the like in a state in which the tactile presentation apparatus HM21 is worn on the user, and acquires object position information indicating the position of the target object of the direction presentation in a three-dimensional space from the server or the like.

Then, for example, on the basis of the acquired object position information and measurement results by the position measuring unit PS21 and the direction measuring unit DR21, the tactile presentation apparatus HM21 works out a tactile presentation position for the time of direction presentation that presents a direction in which the target object is located.

Here, the tactile presentation position refers to a position at which the user is made to perceive that the tactile presentation is being performed when the user is made to recognize a direction in which the target object is located by tactile presentation, that is, a position to be perceived to be a center position of the vibration stimulation being given.

The tactile presentation apparatus HM21 performs direction presentation by vibrating one or a plurality of tactile presentation units SV21 according to the worked-out tactile presentation position to perform tactile presentation for the tactile presentation position. Here, the tactile presentation unit SV21 used for tactile presentation is assumed to be one or a plurality of tactile presentation units SV21 corresponding to the tactile presentation position among the plurality of tactile presentation units SV21 provided in the tactile presentation apparatus HM21.

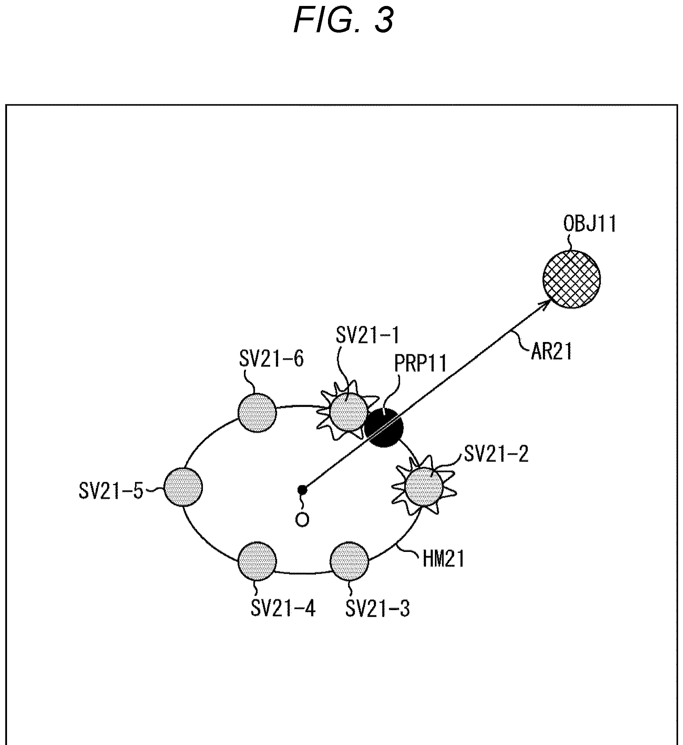

Specifically, for example, as illustrated in Fig. 3, it is assumed that each tactile presentation unit SV21 is arranged so as to be placed in order on the circumference of a circle such as a perfect circle or an ellipse, in other words, arranged in a circumferential shape, and a target object OBJ11 is located in a direction indicated by an arrow AR21 as viewed from the center of the circle. Note that, in Fig. 3, constituent members corresponding to those in the case of Fig. 2 are denoted with the same reference numerals and the description thereof will be omitted as appropriate.

Here, the arrow AR21 is an arrow whose starting point is the center position of the user, that is, a center O, which is the center position of the tactile presentation apparatus HM21 wrapped in a ring form, and ending point is the target object OBJ11. Hereinafter, like the direction indicated by the arrow AR21, a direction from the center position of the tactile presentation apparatus toward the target object, that is, the direction of the target object, will be particularly referred to also as a target object direction.

In this example, the target object direction is given as a horizontal direction, which is a direction on a horizontal plane as viewed from the user (tactile presentation apparatus HM21), that is, an azimuth direction.

In this case, when the direction of the target object OBJ11 is presented, the user will be made to recognize the direction indicated by the arrow AR21 in which the target object OBJ11 is located. In different terms, by vibrating one or some of the plurality of tactile presentation units SV21 arranged in a circumferential shape, the presentation of the target object direction, that is, the direction presentation in the horizontal direction is performed.

In such an example, the position of intersection between the band portion constituting the tactile presentation apparatus HM21 and the arrow AR21 is given as a tactile presentation position PRP11 on the tactile presentation apparatus HM21. In other words, since a direction in which the tactile presentation position PRP11 is located as viewed from the center O is given as the target object direction, it can be said that the tactile presentation position PRP11 indicates a direction in which the target object OBJ11 is located.

Accordingly, by making the user perceive that the tactile presentation is being performed by vibration stimulation for the tactile presentation position PRP11, the direction indicated by the arrow AR21 can be allowed to be recognized as a direction in which the target object OBJ11 is located.

In the tactile presentation at the tactile presentation position PRP11, it is only required to vibrate one or a plurality of tactile presentation units SV21 corresponding to the tactile presentation position PRP11.

Here, regarding the tactile presentation unit SV21 corresponding to the tactile presentation position PRP11, for example, in a case where, as an example, the tactile presentation position PRP11 is located between two tactile presentation units SV21, these two tactile presentation units SV21 can be assumed as the tactile presentation units SV21 corresponding to the tactile presentation position PRP11.

Besides, for example, one or a plurality of tactile presentation units SV21 located at a position within a predetermined distance from the tactile presentation position PRP11 may be assumed as the tactile presentation units SV21 corresponding to the tactile presentation position PRP11. Moreover, for example, one or a plurality of tactile presentation units SV21 located at a position closest to the tactile presentation position PRP11 may be assumed as the tactile presentation units SV21 corresponding to the tactile presentation position PRP11.

In the following, in a case where the tactile presentation position PRP11 is located between two tactile presentation units SV21, it is assumed that the tactile presentation is performed using these two tactile presentation units SV21. Accordingly, in this example, by vibrating the tactile presentation units SV21-1 and SV21-2 located near the tactile presentation position PRP11 as the tactile presentation units SV21 corresponding to the tactile presentation position PRP11, the tactile presentation for the tactile presentation position PRP11 is implemented.

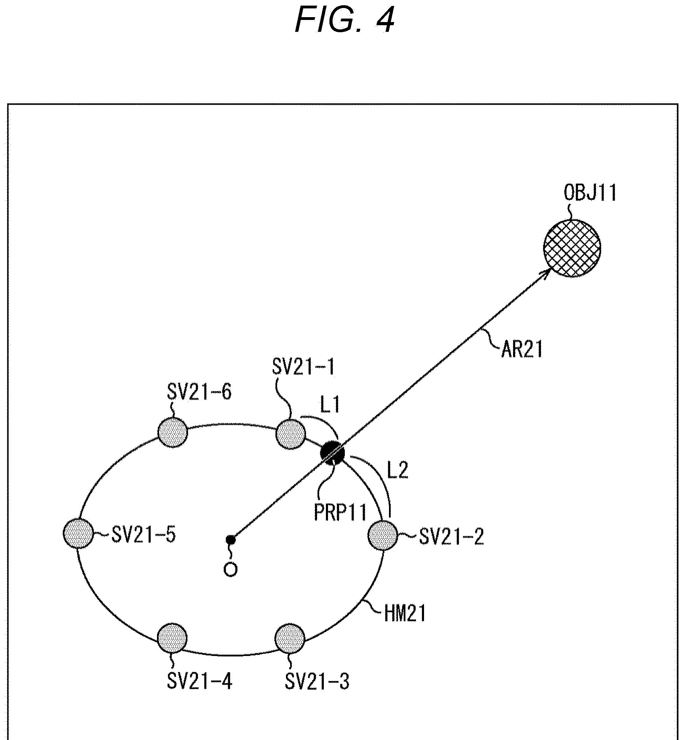

At this time, the vibration intensity in the tactile presentation units SV21-1 and SV21-2 can be defined according to distances from the tactile presentation units SV21 to the tactile presentation position PRP11, for example, as illustrated in Fig. 4. Note that, in Fig. 4, constituent members corresponding to those in the case of Fig. 3 are denoted with the same reference numerals and the description thereof will be omitted as appropriate.

In this example, the distance from the tactile presentation unit SV21-1 to the tactile presentation position PRP11 is given as a distance L1, and the distance from the tactile presentation unit SV21-2 to the tactile presentation position PRP11 is given as a distance L2.

Note that these distance L1 and distance L2 can be worked out from positions where the tactile presentation units SV21 are provided in the band portion of the tactile presentation apparatus HM21, which are already known, and the tactile presentation position PRP11 worked out on the basis of the object position information and the like.

Furthermore, the distance L1 and the distance L2 are each assumed as a distance from the tactile presentation unit SV21 to the tactile presentation position PRP11 on the band constituting the tactile presentation apparatus HM21, but may be a linear distance.

In the tactile presentation apparatus HM21, the vibration intensity at the time of tactile presentation in each tactile presentation unit SV21 is worked out such that the tactile presentation unit SV21 with a shorter distance from the tactile presentation position PRP11 has stronger vibration intensity.

Specifically, for example, when a predetermined constant is assumed as C, the vibration intensity when vibrating the tactile presentation unit SV21-1 is given as C × L2/(L1 + L2), and the vibration intensity when vibrating the tactile presentation unit SV21-2 is given as C × L1/(L1 + L2).

In this manner, by vibrating one tactile presentation unit SV21 or simultaneously vibrating a plurality of tactile presentation units SV21 corresponding to the tactile presentation position PRP11 with a vibration intensity according to the distance to the tactile presentation position PRP11, feeling as if the tactile presentation for the tactile presentation position PRP11 is being performed can be made.

In different terms, by controlling a plurality of tactile presentation units SV21 corresponding to the tactile presentation position PRP11 according to the distance from the tactile presentation unit SV21 to the tactile presentation position PRP11, the tactile presentation for the tactile presentation position PRP11 can be implemented.

In particular, by vibrating a plurality of tactile presentation units SV21 with a vibration intensity according to the distance to the tactile presentation position PRP11, direction presentation indicating an arbitrary target object direction can be performed without depending on the number of tactile presentation units SV21 provided in the tactile presentation apparatus HM21. This makes it possible to present the direction more accurately than if the direction presentation is performed by always vibrating only one tactile presentation unit SV21 regardless of the target object direction.

Furthermore, since the user can grasp the accurate direction in which the target object is located only with tactile presentation, that is, only with vibration stimulation, the user can concentrate on a behavior or the like performed according to the direction presentation, such as approaching the target object while looking at the surrounding environment.

Note that, in a case where the tactile presentation position PRP11 matches the position of a predetermined tactile presentation unit SV21, only the predetermined tactile presentation unit SV21 needs to be vibrated.

In addition, although Fig. 3 describes an example in which the number of target objects is one, also in a case where the number of target objects is two or more, a direction presentation that allows a direction in which each target object is located to be recognized can be similarly performed.

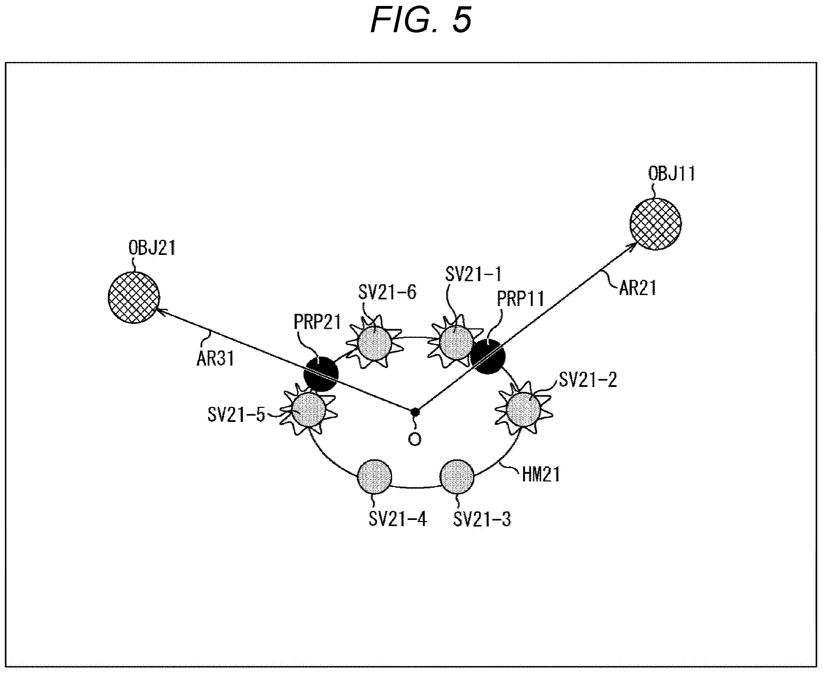

For example, it is assumed that there are two target objects as illustrated in Fig. 5. Note that, in Fig. 5, constituent members corresponding to those in the case of Fig. 3 are denoted with the same reference numerals and the description thereof will be omitted as appropriate.

In this example, target objects OBJ11 and OBJ21 are present around the user wearing the tactile presentation apparatus HM21.

In such a case, the tactile presentation apparatus HM21 works out a tactile presentation position PRP11 for the target object OBJ11 as described above. Then, on the basis of the obtained tactile presentation position PRP11, the tactile presentation apparatus HM21 works out the vibration intensity of the tactile presentation unit SV21 corresponding to the tactile presentation position PRP11. Here, for example, vibration intensities of the tactile presentation units SV21-1 and SV21-2 as the tactile presentation units SV21 corresponding to the tactile presentation position PRP11 are worked out.

Furthermore, the tactile presentation apparatus HM21 works out a tactile presentation position PRP21 for the target object OBJ21 similarly to the case of the target object OBJ11, and on the basis of the obtained tactile presentation position PRP21, works out the vibration intensity of the tactile presentation unit SV21 corresponding to the tactile presentation position PRP21. Here, for example, vibration intensities of the tactile presentation units SV21-5 and SV21-6 as the tactile presentation units SV21 corresponding to the tactile presentation position PRP21 are worked out.

Moreover, the tactile presentation apparatus HM21 performs the tactile presentation by simultaneously vibrating the tactile presentation units SV21-1, SV21-2, SV21-5, and SV21-6 with the worked-out vibration intensities. This allows the user to simultaneously recognize the direction indicated by an arrow AR21 in which the target object OBJ11 is located and the direction indicated by an arrow AR31 in which the target object OBJ21 is located. In other words, a plurality of directions can be presented simultaneously.

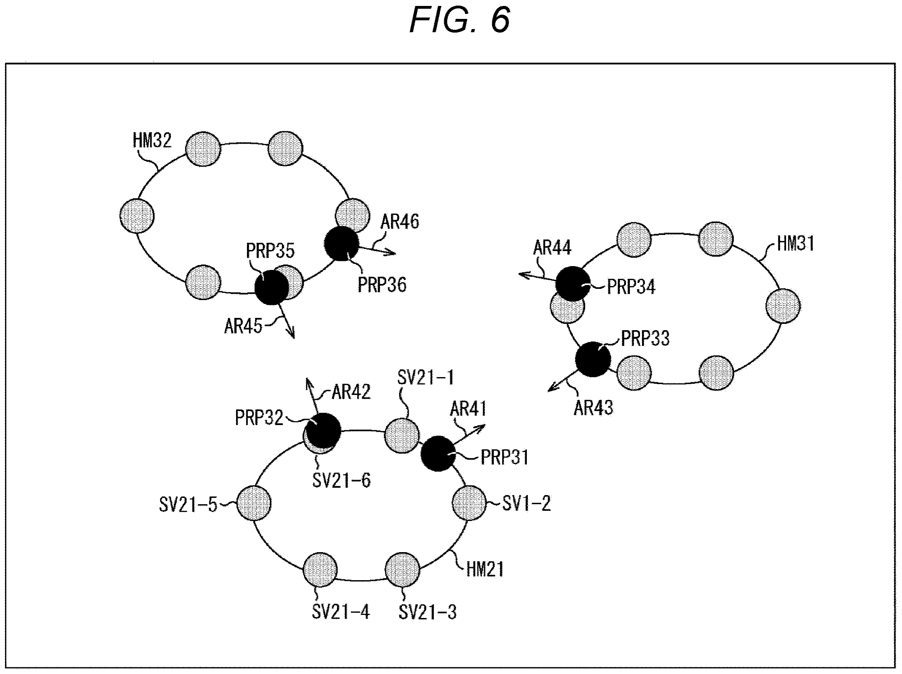

Accordingly, in a case where another tactile presentation apparatus is assumed as a target object for the tactile presentation apparatus HM21, for example, as illustrated in Fig. 6, such a direction presentation that makes the user recognize the direction of the another tactile presentation apparatus can be performed. Note that, in Fig. 6, constituent members corresponding to those in the case of Fig. 5 are denoted with the same reference numerals and the description thereof will be omitted as appropriate.

In this example, tactile presentation apparatuses HM21, HM31, and HM32 are present in a three-dimensional space.

The tactile presentation apparatuses HM31 and HM32 are assumed as target objects for the tactile presentation apparatus HM21, and the communication module CR21 of the tactile presentation apparatus HM21 acquires object position information indicating the positions of the tactile presentation apparatuses HM31 and HM32 from a server or these tactile presentation apparatuses.

Then, the tactile presentation apparatus HM21 works out a tactile presentation position PRP31 for the tactile presentation apparatus HM31 on the basis of the acquired object position information, and performs tactile presentation for the worked-out tactile presentation position PRP31 to make the user recognize a direction indicated by an arrow AR41 in which the tactile presentation apparatus HM31 is located.

At the same time, the tactile presentation apparatus HM21 works out a tactile presentation position PRP32 for the tactile presentation apparatus HM32 on the basis of the acquired object position information, and performs tactile presentation for the worked-out tactile presentation position PRP32 to make the user recognize a direction indicated by an arrow AR42 in which the tactile presentation apparatus HM32 is located.

Similarly, the tactile presentation apparatuses HM21 and HM32 are assumed as target objects for the tactile presentation apparatus HM31, and the tactile presentation apparatus HM31 acquires object position information regarding the tactile presentation apparatuses HM21 and HM32 from a server or these tactile presentation apparatuses.

Then, the tactile presentation apparatus HM31 works out a tactile presentation position PRP33 for the tactile presentation apparatus HM21 on the basis of the acquired object position information, and performs tactile presentation for the worked-out tactile presentation position PRP33 to make a user recognize a direction indicated by an arrow AR43 in which the tactile presentation apparatus HM21 is located.

Furthermore, the tactile presentation apparatus HM31 works out a tactile presentation position PRP34 for the tactile presentation apparatus HM32 on the basis of the acquired object position information, and performs tactile presentation for the worked-out tactile presentation position PRP34 to make the user recognize a direction indicated by an arrow AR44 in which the tactile presentation apparatus HM32 is located.

Moreover, the tactile presentation apparatuses HM21 and HM31 are assumed as target objects for the tactile presentation apparatus HM32, and the tactile presentation apparatus HM32 acquires object position information regarding the tactile presentation apparatuses HM21 and HM31 from a server or these tactile presentation apparatuses.

Then, the tactile presentation apparatus HM32 works out a tactile presentation position PRP35 for the tactile presentation apparatus HM21 on the basis of the acquired object position information, and performs tactile presentation for the worked-out tactile presentation position PRP35 to make a user recognize a direction indicated by an arrow AR45 in which the tactile presentation apparatus HM21 is located.

Furthermore, the tactile presentation apparatus HM32 works out a tactile presentation position PRP36 for the tactile presentation apparatus HM31 on the basis of the acquired object position information, and performs tactile presentation for the worked-out tactile presentation position PRP36 to make the user recognize a direction indicated by an arrow AR46 in which the tactile presentation apparatus HM31 is located.

In a case where there is a plurality of tactile presentation apparatuses as described above, each tactile presentation apparatus assumes another tactile presentation apparatus as a target object, such that a user wearing each tactile presentation apparatus can be made to recognize the direction of another tactile presentation apparatus.

Furthermore, in a case where there is a plurality of target objects, and directions in which this plurality of target objects is located are presented by tactile presentation, context information indicating what kind of object each target object is may be further presented by sound presentation using a sound presentation technology or the like relating to directivity, simultaneously with tactile presentation. In this case, for example, the context information may be acquired together with the object position information.

Incidentally, as described earlier, the positional relationship between the tactile presentation position and each tactile presentation unit changes depending on the wearing state of the tactile presentation apparatus, that is, the degree of tightening of the band portion constituting the tactile presentation apparatus.

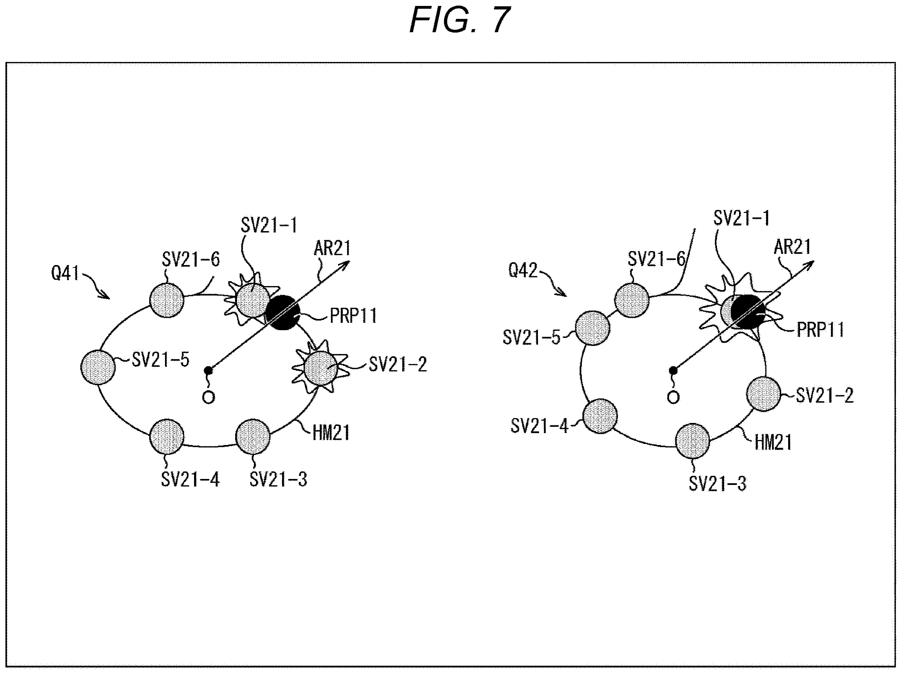

Thus, for example, as illustrated in Fig. 7, the tactile presentation apparatus is configured such that the wearing state of the tactile presentation apparatus, that is, the wearing state of each tactile presentation unit is estimated by a sensor or the like, and the exact position of the tactile presentation unit is grasped on the basis of the result of the estimation. Note that, in Fig. 7, constituent members corresponding to those in the case of Fig. 4 are denoted with the same reference numerals and the description thereof will be omitted as appropriate.

For example, in an example indicated by an arrow Q41 in Fig. 7, a waist portion of the user on which the tactile presentation apparatus HM21 is worn has an appropriate thickness, and the respective tactile presentation units SV21 are placed in order at substantially equal intervals.

For example, it is assumed that belt holes for wearing the tactile presentation apparatus HM21 are provided in the band portion of the tactile presentation apparatus HM21, and a sensor for finding the wearing state is provided in a buckle portion of the belt. In such a case, the sensor for finding the wearing state finds at what place in the belt a hole by which the tactile presentation apparatus HM21 is fixed (worn) is located, whereby the length of a belt (band) portion wrapped around the user is quantified. Then, the tactile presentation apparatus HM21 works out the wearing position of each tactile presentation unit SV21 by estimation as the wearing state on the basis of the result of the quantification.

Here, for example, the wearing position of the tactile presentation unit SV21 may use any position as a reference, such as a position with reference to a predetermined position of the tactile presentation apparatus HM21, or a position of the tactile presentation unit SV21 as viewed from the center O of the tactile presentation apparatus HM21 (user).

Furthermore, for example, in a case where the tactile presentation apparatus HM21 is provided with a roller that rotates when the band portion of the tactile presentation apparatus HM21 is tightened, a sensor that quantifies (finds) the number of rotations of the provided roller only needs to be provided in the tactile presentation apparatus HM21 as a sensor for finding the wearing state. In such a case, the wearing position of each tactile presentation unit SV21 can be obtained from the quantification result for the number of rotations by the sensor for finding the wearing state.

The tactile presentation apparatus HM21 holds in advance wearing position data indicating the wearing position of each tactile presentation unit SV21 in an ideal wearing state, and estimates the wearing state of each tactile presentation unit SV21 on the basis of the held wearing position data and the finding result of the sensor for finding the wearing state.

In the tactile presentation apparatus HM21, a process of estimating the wearing state and obtaining the actual wearing position of each tactile presentation unit SV21 is performed as a calibration process.

When such a calibration process is performed, the actual wearing position of each tactile presentation unit SV21 can be exactly grasped, such that accurate tactile presentation for the tactile presentation position PRP11 can be performed.

In other words, in the example indicated by the arrow Q41, the tactile presentation apparatus HM21 can specify that the tactile presentation position PRP11 is located between the tactile presentation units SV21-1 and SV21-2, from the result of the calibration process, and can also exactly work out distances between these tactile presentation units SV21 and the tactile presentation position PRP11. Accordingly, the tactile presentation apparatus HM21 can make the user recognize a direction indicated by an arrow AR21 by vibrating the tactile presentation units SV21-1 and SV21-2 with appropriate vibration intensities to perform tactile presentation.

In contrast to this, for example, as indicated by an arrow Q42, in a case where a waist portion of the user on which the tactile presentation apparatus HM21 is worn is thinner, the respective tactile presentation units SV21 are arranged so as to be placed in order at irregular intervals. However, even in such a case, the tactile presentation apparatus HM21 can grasp the accurate wearing position of each tactile presentation unit SV21 from the result of the calibration process, and thus can specify that the tactile presentation position PRP11 is located at the position of the tactile presentation unit SV21-1.

Accordingly, the tactile presentation apparatus HM21 can make the user recognize a direction indicated by an arrow AR21 by vibrating the tactile presentation unit SV21-1 with an appropriate vibration intensity to perform tactile presentation.

As described above, by estimating the wearing state of each tactile presentation unit SV21 and performing tactile presentation on the basis of the result of the estimation, the direction of the target object can be presented more accurately.

In particular, the shorter the distance between the user and the target object, the larger the deviation in the presentation direction with respect to the deviation in the wearing position of the tactile presentation unit SV21. However, in the tactile presentation apparatus HM21, the more accurate wearing position of the tactile presentation unit SV21 can be grasped by the estimation of the wearing state, that is, the calibration process, such that the direction presentation can be performed with higher precision.

According to such a tactile presentation apparatus HM21, for example, even when a distance between the user and the target object is shorter, the user can be made to intuitively and more accurately recognize a direction in which the target object is located.

Furthermore, in the tactile presentation apparatus HM21, the description has been given that the user is made to recognize the direction of the target object by vibrating each tactile presentation unit SV21 to perform tactile presentation; however, the distance to the target object may also be presented by tactile presentation.

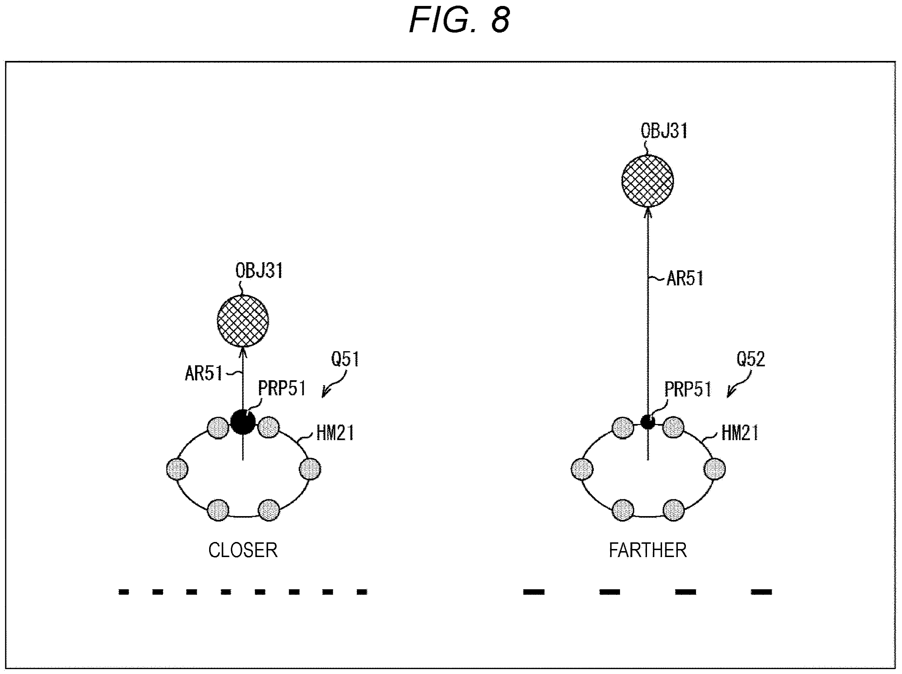

For example, as illustrated in Fig. 8, it is assumed that a target object OBJ31 is located ahead of the tactile presentation apparatus HM21.

In the example indicated by an arrow Q51 in Fig. 8, the target object OBJ31 is present at a position comparatively close to the tactile presentation apparatus HM21 ahead of the tactile presentation apparatus HM21.

At this time, the tactile presentation apparatus HM21 performs tactile presentation at a tactile presentation position PRP51, and makes the user recognize a direction in which the target object OBJ31 is located, that is, a direction indicated by an arrow AR51.

In this case, by changing the vibration for tactile presentation according to the distance from the tactile presentation apparatus HM21 to the target object OBJ31, for example, by vibration intensity (vibration magnitude), vibration cycle, or vibration pattern (presentation pattern of tactile presentation) at the time of tactile presentation, the tactile presentation apparatus HM21 can present the distance to the target object OBJ31 to the user.

For example, in the example indicated by the arrow Q51, since the distance to the target object OBJ31 is shorter, the tactile presentation apparatus HM21 increases the magnitude of the vibration (vibration intensity) when performing tactile presentation.

Here, the size of the circle representing the tactile presentation position PRP51 represents the vibration intensity, and the tactile presentation apparatus HM21 vibrates the tactile presentation unit SV21 with a stronger vibration intensity according to the distance to the target object OBJ31 to present the distance to the target object OBJ31 to the user.

At the same time, here, since the distance to the target object OBJ31 is shorter, the tactile presentation apparatus HM21 shortens the interval (cycle) of the vibration when performing tactile presentation. In other words, the tactile presentation apparatus HM21 presents the distance to the target object OBJ31 to the user by vibrating the tactile presentation unit SV21 at a higher vibration frequency.

Conversely, for example, in the example indicated by an arrow Q52, the target object OBJ31 is present at a position comparatively far from the tactile presentation apparatus HM21 ahead of the tactile presentation apparatus HM21.

At this time, the tactile presentation apparatus HM21 performs tactile presentation at the tactile presentation position PRP51 similarly to the case of the example indicated by the arrow Q51, and makes the user recognize a direction in which the target object OBJ31 is located, that is, a direction indicated by the arrow AR51.

Only the distance from the tactile presentation apparatus HM21 to the target object OBJ31 differs between the example indicated by the arrow Q51 and the example indicated by the arrow Q52, and a direction in which the target object OBJ31 is located is given as the same direction.

In the example indicated by the arrow Q52, since the distance to the target object OBJ31 is longer, the tactile presentation apparatus HM21 decreases the magnitude of the vibration (vibration intensity) when performing tactile presentation.

Here, the size of the circle representing the tactile presentation position PRP51 represents the vibration intensity, and the tactile presentation apparatus HM21 vibrates the tactile presentation unit SV21 with a weaker vibration intensity according to the distance to the target object OBJ31 to present the distance to the target object OBJ31 to the user.

At the same time, here, since the distance to the target object OBJ31 is longer, the tactile presentation apparatus HM21 lengthens the interval (cycle) of the vibration when performing tactile presentation. In other words, the tactile presentation apparatus HM21 presents the distance to the target object OBJ31 to the user by vibrating the tactile presentation unit SV21 at a lower vibration frequency.

As described above, by changing the vibration intensity and vibration frequency (vibration cycle) of the vibration of the tactile presentation unit SV21 when performing tactile presentation according to the distance from the tactile presentation apparatus HM21 to the target object OBJ31, the distance to the target object OBJ31 can be presented to the user. Moreover, by simultaneously presenting the distance to the target object as well as the direction of the target object, the user can more accurately grasp the positional relationship between the user and the target object.

Furthermore, the tactile presentation apparatus HM21 is provided with a plurality of tactile presentation units SV21, and these tactile presentation units SV21 are worn on mutually different parts of the user.

However, the human body has different perceptual characteristics (sensitivity characteristics) with respect to tactile presentation such as vibration stimulation for each part. Therefore, for example, even when the tactile presentation units SV21 are vibrated with the same vibration intensity, if the wearing positions of the tactile presentation units SV21, that is, the contact parts of the user with the tactile presentation units SV21 are different, the intensity of the vibration stimulation perceived by the user (perceived intensity) is also differentiated.

Accordingly, in a case where the perceptual characteristics of each part of the user are not considered, for example, as described with reference to Fig. 8, when the distance to the target object is presented by the vibration intensity and the vibration frequency of the vibration by the tactile presentation unit SV21, there is a possibility that the distance recognized by the user is given as a distance different from the distance originally desired to be presented. Furthermore, in a case where the direction presentation is performed by vibrating a plurality of tactile presentation units SV21, depending on a difference in perceptual characteristics at the wearing positions of these tactile presentation units SV21, there is also a possibility that the tactile presentation position perceived by the user is given as a position different from the position originally expected to be perceived.

Thus, for example, the vibration intensity and frequency characteristics of the vibration stimulation by each tactile presentation unit SV21 may be corrected according to the wearing position of the tactile presentation unit SV21 such that the user can be made to perceive the tactile presentation as intended.

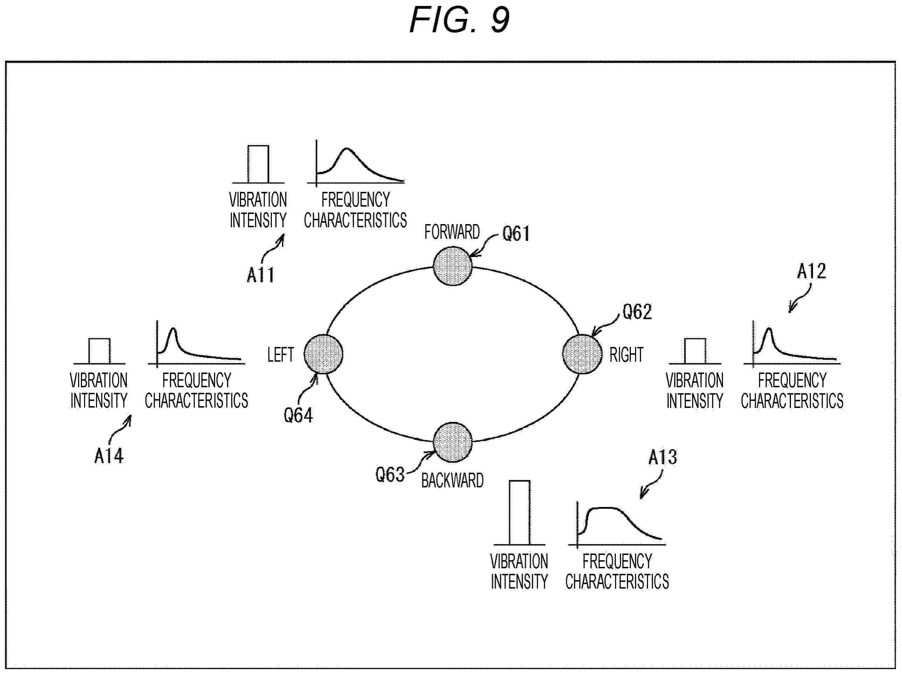

Specifically, for example, as illustrated in Fig. 9, respective portions indicated by arrows Q61 to Q64 are assumed as parts of the waist portion of the user on the forward, right, backward, and left sides.

Then, the tactile presentation apparatus HM21 is assumed to hold in advance data indicating perceptual characteristics (hereinafter, also referred to as perceptual characteristic data), such as the perceived intensity with respect to the vibration intensity of the vibration stimulation, and the perceptual characteristics with regard to the vibration frequency of the vibration stimulation, that is, frequency characteristics, for some parts such as parts of the waist portion of the user on the forward, right, backward, and left sides.

In this case, for example, the perceptual characteristic data can be held for each wearing position of the tactile presentation unit SV21 indicated by the wearing position data, that is, for each ideal wearing position of the tactile presentation unit SV21.

The tactile presentation apparatus HM21 generates correction data for each tactile presentation unit SV21 on the basis of the wearing position of the tactile presentation unit SV21, that is, the contact position of the tactile presentation unit SV21 with the user obtained by the calibration process, and the perceptual characteristic data held in advance.

Here, the correction data is data indicating correction values of the vibration intensity and frequency characteristics when vibrating the tactile presentation unit SV21.

Note that, in generating the correction data, the perceptual characteristic data of the actual wearing position of the tactile presentation unit SV21, that is, the perceptual characteristic data of the part of the user in contact with the tactile presentation unit SV21 is required, and in a case where the perceptual characteristic data of the contact part is not held, the perceptual characteristic data is only required to be generated by linear interpolation or the like.

Specifically, for example, it is assumed that the perceptual characteristic data of the part indicated by the arrow Q61 and the perceptual characteristic data of the part indicated by the arrow Q62 are held in advance, but the perceptual characteristic data of a part positioned between the part indicated by the arrow Q61 and the part indicated by the arrow Q62 is not held in advance.

In this case, for example, the tactile presentation apparatus HM21 performs an interpolation process such as linear interpolation on the basis of the perceptual characteristic data of the part indicated by the arrow Q61 and the perceptual characteristic data of the part indicated by the arrow Q62, and generates the perceptual characteristic data of the part located between the part indicated by the arrow Q61 and the part indicated by the arrow Q62.

Furthermore, it is assumed that there is a tactile signal for giving vibration stimulation having a predetermined vibration intensity and a predetermined frequency characteristic, and the tactile presentation unit SV21 is located at a position indicated by each of the arrows Q61 to Q64.

At this time, when each tactile presentation unit SV21 vibrates on the basis of a tactile signal corrected with the correction data, for example, vibration stimulations having respective characteristics indicated by arrows A11 to A14 are given to respective parts of the waist portion of the user on the forward, right, backward, and left sides.

For example, it can be seen that, in the characteristics of the vibration stimulation indicated by the arrow A13, the vibration intensity is strong as compared with the vibration stimulations given to other parts of the user, and furthermore, as for the frequency characteristics, strong stimulation is given over a comparatively wide frequency band, as compared with the vibration stimulations given to other parts of the user.

The reason why the correction is performed so as to achieve such characteristics indicated by the arrow A13 is that the part of the waist portion of the user on the backward side, that is, the part on the side of the back has perceptual characteristics that the sensitivity to vibration stimulation is low in a comparatively wide frequency range, as compared with other parts about the waist such as parts on side surfaces and on a forward surface.

Conversely, for example, as indicated by the arrows A12 and A14, the side surface portions having comparatively high sensitivity as compared with the backward side of the waist portion have, as the characteristics of the vibration stimulation, characteristics in which the vibration intensity is weak as compared with the vibration stimulations given to other parts of the user, and strong stimulation is given only in a low band.

In this manner, when correction based on the correction data is performed on the same tactile signal according to the user's part, that is, according to the wearing position of the tactile presentation unit SV21, and tactile presentation is performed at each tactile presentation unit SV21 on the basis of the corrected tactile signal, vibration stimulations having different characteristics for each part are given to the user as indicated by the arrows A11 to A14.

In this case, the characteristics of the vibration stimulation given to each part of the user are different, but the user will perceive that vibration stimulations having the same characteristics, that is, the same vibration intensity and frequency characteristic are given to the respective parts of the waist portion on the forward, right, backward, and left sides.

By generating the correction data for each tactile presentation unit SV21 on the basis of the wearing position of the tactile presentation unit SV21 and the user's perceptual characteristic data, and correcting the tactile signal on the basis of the correction data in this manner, the user can be made to perceive tactile presentation as intended. Consequently, the direction and distance of the target object can be presented more accurately.

Note that, although an example in which the correction data is generated on the basis of the perceptual characteristic data prepared in advance has been described here, the correction data may be generated according to a user's operation on an input unit such as a switch provided in the tactile presentation apparatus HM21 or a user's operation on an external apparatus such as a smartphone connected to the tactile presentation apparatus HM21.

For example, in a case where the user operates the input unit provided in the tactile presentation apparatus HM21, and the tactile presentation apparatus HM21 generates the correction data according to the operation of the user, the tactile presentation apparatus HM21 firstly vibrates each tactile presentation unit SV21 with certain vibration intensity and frequency characteristics.

In response to this, the user operates the input unit to input an instruction to, for example, weaken the vibration intensity for each tactile presentation unit SV21, and the tactile presentation apparatus HM21 generates the correction data according to the instruction input by the user. Then, the tactile presentation apparatus HM21 vibrates each tactile presentation unit SV21 again on the basis of the tactile signal subjected to correction based on the obtained correction data.

Thereafter, the process of vibrating the tactile presentation unit SV21 and the process of altering the correction data according to the instruction input by the user are repeatedly performed until the user inputs the instruction to end the generation of the correction data.

According to such a process, even if the perceptual characteristic data is not prepared in advance, it is possible to obtain appropriate correction data according to the personal perceptual characteristics of the user, the clothing of the user, and the like.

### <About Direction Presentation in Up-Down Direction>

Furthermore, in the tactile presentation apparatus HM21 described in the above, an example in which all the tactile presentation units SV21 for tactile presentation are arranged on one circumference, that is, on one horizontal plane has been described. In this case, the tactile presentation apparatus HM21 can perform direction presentation to the user only in the horizontal direction (azimuth direction).

Besides this, however, for example, by arranging a plurality of tactile presentation units on each of two horizontal planes having mutually different heights, that is, by arranging a plurality of tactile presentation units in a vertical direction, direction presentation not only in the horizontal direction but also in the vertical direction (elevation angle direction) may be enabled.

In such a case, for example, in the tactile presentation apparatus, the tactile presentation units are arranged so as to be placed in order also in the up-down direction (vertical direction) as illustrated in Fig. 10.

In this example, a tactile presentation apparatus HM41 is a belt-type device that is wrapped around a waist portion of the user when worn.

The tactile presentation apparatus HM41 is provided with six tactile presentation units SV61-1 to SV61-6 arranged in a circumferential shape on one horizontal plane at substantially equal intervals.

These tactile presentation units SV61-1 to SV61-6 are arranged so as to come into contact with the waist portion of the user when the tactile presentation apparatus HM41 is worn, and perform tactile presentation by vibration stimulation to the user by vibrating. Note that, hereinafter, in a case where there is no need to particularly distinguish the tactile presentation units SV61-1 to SV61-6, the tactile presentation units SV61-1 to SV61-6 will be also simply referred to as tactile presentation units SV61.

Furthermore, the tactile presentation apparatus HM41 is provided with six tactile presentation units SV62-1 to SV62-6 arranged in a circumferential shape on another horizontal plane located at a height different from the horizontal plane on which the tactile presentation units SV61 are arranged, at substantially equal intervals.

These tactile presentation units SV62-1 to SV62-6 are arranged so as to come into contact with the waist portion of the user when the tactile presentation apparatus HM41 is worn, and perform tactile presentation by vibration stimulation to the user by vibrating. Note that, hereinafter, in a case where there is no need to particularly distinguish the tactile presentation units SV62-1 to SV62-6, the tactile presentation units SV62-1 to SV62-6 will be also simply referred to as tactile presentation units SV62.

As described above, the tactile presentation apparatus HM41 is provided with the tactile presentation units SV61 and the tactile presentation units SV62 at positions having mutually different heights as viewed from the user, such that direction presentation not only in the horizontal direction but also in the vertical direction (elevation angle direction) as viewed from the user can be performed.

For example, it is assumed that a direction in which the tactile presentation units SV61-1 and SV62-1 are located is a front direction as viewed from the user, and the target object is located in the front direction.

In this case, for example, when the target object is located in an upper front side of the tactile presentation apparatus HM41, the tactile presentation apparatus HM41 performs tactile presentation in which the tactile presentation unit SV62-1 is vibrated, thereby being able to make the user recognize that the target object is located ahead on an upper side.

In contrast to this, for example, when the target object is located in a lower front side of the tactile presentation apparatus HM41, the tactile presentation apparatus HM41 performs tactile presentation in which the tactile presentation unit SV61-1 is vibrated, thereby being able to make the user recognize that the target object is located ahead on a lower side. Moreover, for example, when the target object is located directly in front of the tactile presentation apparatus HM41, the tactile presentation apparatus HM41 performs tactile presentation in which the tactile presentation units SV61-1 and SV62-1 are simultaneously vibrated, thereby being able to make the user recognize that the target object is located directly in front of the user.

### <About Vest-Type Tactile Presentation Apparatus>

Additionally, the tactile presentation apparatus that presents the direction and distance of the target object to the user by tactile presentation is not restricted to the belt type, but may be a vest type.

In such a case, the tactile presentation apparatus is configured as illustrated in Fig. 11, for example.

A tactile presentation apparatus HM51 illustrated in Fig. 11 is a vest-type device having a function of presenting a direction in which the target object is located and presenting a distance to the target object by tactile presentation.

This tactile presentation apparatus HM51 is provided with tactile presentation units SV71-1 to SV71-6 that perform tactile presentation by vibration to parts on a forward surface of the user's body.

These tactile presentation units SV71-1 to SV71-6 are formed by, for example, piezo element actuators, and vibrate on the basis of a supplied tactile signal to perform a tactile presentation to the user by vibration stimulation.

Note that, hereinafter, in a case where there is no need to particularly distinguish the tactile presentation units SV71-1 to SV71-6, the tactile presentation units SV71-1 to SV71-6 will be also simply referred to as tactile presentation units SV71.

Furthermore, sheet-shaped pressure sensors DT11-1 and DT11-2 are provided at least in a portion of the tactile presentation apparatus HM51 where the tactile presentation units SV71 are provided.

These pressure sensors DT11-1 and DT11-2 are sensors for finding the wearing state that quantify a three-dimensional (3D) shape of the tactile presentation apparatus HM51 in a portion where the tactile presentation units SV71 are provided, in different terms, the 3D shape of the user's body.

Note that, hereinafter, in a case where there is no need to particularly distinguish the pressure sensors DT11-1 and DT11-2, the pressure sensors DT11-1 and DT11-2 will be also simply referred to as pressure sensors DT11. Furthermore, the pressure sensor DT11 may be a mesh-shaped pressure sensor formed by a plurality of thin wires as well as a sheet-shaped sensor.

In the tactile presentation apparatus HM51, similarly to the case of the belt-type tactile presentation apparatus HM21 described above, the contact position of the tactile presentation unit SV71 with the user changes depending on the body type of the user wearing the tactile presentation apparatus HM51. In other words, the wearing state of each tactile presentation unit SV71 changes depending on the user's body type.

Thus, the tactile presentation apparatus HM51 may perform a calibration process similar to the case of the tactile presentation apparatus HM21 to work out the actual wearing position of each tactile presentation unit SV71.

In other words, for example, the tactile presentation apparatus HM51 holds in advance wearing position data indicating the wearing position of each tactile presentation unit SV71 in an ideal wearing state.

The tactile presentation apparatus HM51 estimates the wearing state of each tactile presentation unit SV71 on the basis of the held wearing position data and the quantification result for the 3D shape by the pressure sensors DT11, and works out the actual wearing position of the tactile presentation unit SV71.

By working out the actual wearing position of the tactile presentation unit SV71 in this manner, more accurate tactile presentation can be performed.

Furthermore, similarly to the case of the tactile presentation apparatus HM21, the tactile presentation apparatus HM51 may hold in advance perceptual characteristic data for each part of the user that can come into contact with the tactile presentation unit SV71, to generate correction data on the basis of the held perceptual characteristic data and the estimation result for the wearing state of the tactile presentation unit SV71. In consequence, the tactile presentation apparatus HM51 can make the user perceive tactile presentation as intended by correcting the tactile signal to be supplied to each tactile presentation unit SV71 on the basis of the generated correction data.

### <About Wristband-Type Tactile Presentation Apparatus>

Besides, the tactile presentation apparatus that presents the direction and distance of the target object to the user by tactile presentation may be configured as a wristband-type device.

In such a case, the tactile presentation apparatus is worn on a portion near the user's wrist, for example, as illustrated in Fig. 12.

In the example illustrated in Fig. 12, a tactile presentation apparatus HM61 is a wristband-type device having a function of presenting a direction in which the target object is located and presenting a distance to the target object by tactile presentation.

This tactile presentation apparatus HM61 is provided with tactile presentation units SV81-1 to SV81-4 that perform tactile presentation by vibration to a portion near the user's wrist.

These tactile presentation units SV81-1 to SV81-4 are formed by, for example, piezo element actuators, and vibrate on the basis of a supplied tactile signal to perform a tactile presentation to the user by vibration stimulation. Note that, hereinafter, in a case where there is no need to particularly distinguish the tactile presentation units SV81-1 to SV81-4, the tactile presentation units SV81-1 to SV81-4 will be also simply referred to as tactile presentation units SV81.

Also in such a tactile presentation apparatus HM61, similarly to the case of the above-described tactile presentation apparatus HM21, a calibration process can be performed to work out the actual wearing position of the tactile presentation unit SV81, and correction data can be worked out on the basis of perceptual characteristic data to correct the tactile signal.

### <Functional Configuration Example of Tactile Presentation Apparatus>

Next, a functional configuration of the tactile presentation apparatuses described above will be described.

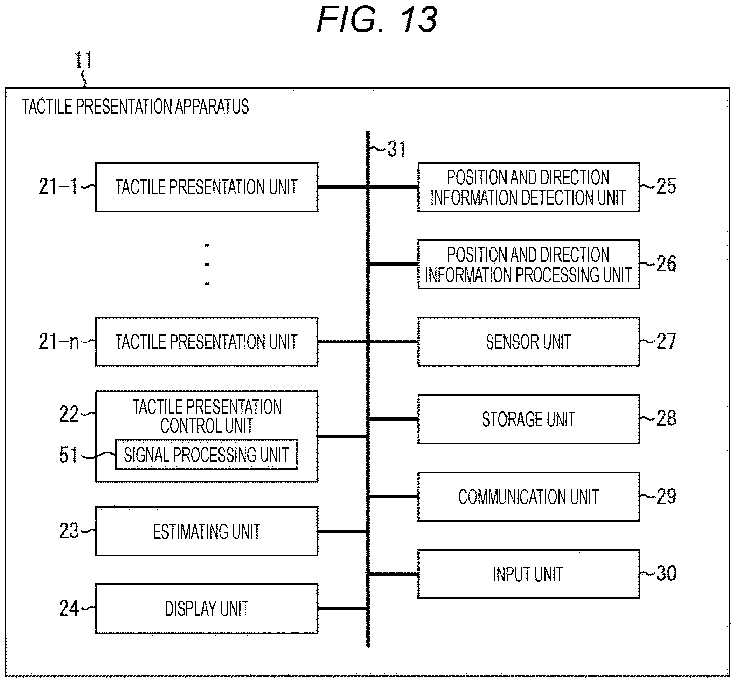

For example, the functional configuration of the tactile presentation apparatus is as illustrated in Fig. 13.

A tactile presentation apparatus 11 illustrated in Fig. 13 is an information processing apparatus that presents the direction of the target object and the distance to the target object to the user by tactile presentation.

This tactile presentation apparatus 11 corresponds to, for example, the above-described tactile presentation apparatus HM21, tactile presentation apparatus HM41, tactile presentation apparatus HM51, and tactile presentation apparatus HM61.

The tactile presentation apparatus 11 includes tactile presentation units 21-1 to 21-n, a tactile presentation control unit 22, an estimating unit 23, a display unit 24, a position and direction information detection unit 25, a position and direction information processing unit 26, a sensor unit 27, a storage unit 28, a communication unit 29, and an input unit 30.

These tactile presentation units 21-1 to input unit 30 are interconnected via a bus 31. Note that some blocks out of the tactile presentation unit 21-1 to the input unit 30 may be connected to each other by a dedicated signal line different from the bus 31.

The tactile presentation units 21-1 to 21-n perform tactile presentation on the basis of a tactile signal supplied from the tactile presentation control unit 22 via the bus 31 to, for example, present the direction of the target object and to present the distance to the target object to the user wearing the tactile presentation apparatus 11. Note that, hereinafter, in a case where there is no need to particularly distinguish the tactile presentation units 21-1 to 21-n, the tactile presentation units 21-1 to 21-n will be also simply referred to as tactile presentation units 21.

In a state in which the user wears the tactile presentation apparatus 11, these n tactile presentation units 21 are put in a state in which the tactile presentation units 21 are arranged at mutually different positions. In other words, each tactile presentation unit 21 is put in a state in which the tactile presentation units 21 are worn on (in contact with) mutually different parts of the user's body.

Here, the tactile presentation by the tactile presentation unit 21 can be configured as a presentation by, for example, vibration stimulation, temperature stimulation, electrical stimulation, force stimulation, or pain stimulation.

For example, in a case where the tactile presentation unit 21 performs tactile presentation by vibration stimulation, the tactile presentation unit 21 is constituted by a tactile presentation device such as a piezo element actuator, a piezoelectric actuator, a linear resonant actuator (LRA), a voice coil motor, and an eccentric motor.

Furthermore, when the tactile presentation unit 21 performs tactile presentation by temperature stimulation, for example, the tactile presentation unit 21 can be constituted by a tactile presentation device such as a Peltier element.

Moreover, when the tactile presentation unit 21 performs tactile presentation by electrical stimulation or force stimulation, for example, the tactile presentation unit 21 can be constituted by a tactile presentation device such as an electrode pad capable of, for example, generating an electric current or giving stimulation that evokes a tactile effect by magnetic force or the like.

Besides, the tactile presentation apparatus 11 may be provided with not only the tactile presentation unit 21 that performs tactile presentation but also a sound presentation device or the like that is formed by, for example, a speaker, and outputs sound on the basis of a supplied sound signal to perform sound presentation to the user by sound.

The tactile presentation control unit 22 generates a tactile signal for performing a predetermined tactile presentation on the basis of tactile data supplied via the bus 31, and supplies the generated tactile signal to the tactile presentation unit 21. In different terms, the tactile presentation control unit 22 supplies the tactile signal to the tactile presentation unit 21 to drive the tactile presentation unit 21, thereby controlling at least one tactile presentation unit 21 out of the n tactile presentation units 21 such that the tactile presentation is performed for a desired tactile presentation position.

Here, the tactile data is, for example, data of a time waveform for performing tactile presentation, and the tactile presentation control unit 22 generates the tactile signal by adjusting the length of the time waveform of the tactile data, the amplitude (magnitude) of the tactile data, frequency characteristics of the tactile data, and the like as appropriate.

For example, in a case where the tactile data is vibration data for performing tactile presentation by vibration, the tactile presentation control unit 22 adjusts the vibration intensity of the tactile presentation by vibration by adjusting the amplitude of the vibration data, and adjusts the vibration frequency of the tactile presentation by the vibration by adjusting the vibration cycle of the tactile data. Furthermore, the tactile presentation control unit 22 adjusts the presentation time of the tactile presentation by adjusting the signal length of the vibration data.

Moreover, the tactile presentation control unit 22 includes a signal processing unit 51; the signal processing unit 51 generates the correction data on the basis of the estimation result for the wearing state of the tactile presentation unit 21 and the perceptual characteristic data (sensitivity characteristic data) supplied via the bus 31, and corrects the tactile signal on the basis of the correction data.

Note that, when the correction data is generated, not only the perceptual characteristic data indicating the perceptual characteristics of each part of the user but also frequency characteristic data indicating the frequency characteristics of the tactile presentation unit 21 may be used.

The estimating unit 23 estimates the wearing state of the tactile presentation unit 21 with respect to the user's body on the basis of the quantification result supplied from the sensor unit 27 for finding the wearing state via the bus 31, and supplies the result of the estimation to the tactile presentation control unit 22.

The display unit 24 is formed by, for example, a liquid crystal display panel or an organic electro luminescence (EL) panel, and displays an image or the like supplied from the tactile presentation control unit 22 or the like via the bus 31.

The position and direction information detection unit 25 is formed by, for example, a position finding system such as a GPS, a 9-axis sensor, a beacon, and a block that calculates the reception strength of a signal from an external base station for the purpose of position measurement, and performs measurement for finding the position of the tactile presentation apparatus 11 in a three-dimensional space and the direction in which the tactile presentation apparatus 11 is facing in a three-dimensional space.

Upon performing the measurement for finding the position and direction of the tactile presentation apparatus 11, the position and direction information detection unit 25 supplies the result of the measurement to the position and direction information processing unit 26 via the bus 31 as position and direction information. For example, the position and direction information detection unit 25 corresponds to the position measuring unit PS21 and the direction measuring unit DR21 illustrated in Fig. 2.

The position and direction information processing unit 26 works out the position and direction of the tactile presentation apparatus 11 in a three-dimensional space on the basis of the position and direction information supplied from the position and direction information detection unit 25.

Furthermore, the position and direction information processing unit 26 works out the tactile presentation position at which the tactile presentation is performed, on the basis of the object position information regarding the target object supplied from the communication unit 29 via the bus 31 and the position and direction of the tactile presentation apparatus 11, and supplies information indicating the worked-out tactile presentation position to the tactile presentation control unit 22. Hereinafter, the information indicating the tactile presentation position is also particularly referred to as tactile presentation position information.

The sensor unit 27 is formed by a sensor for finding the wearing state formed by, for example, a sensor that quantifies the degree of tightening of the tactile presentation apparatus 11, and a pressure sensor that quantifies a three-dimensional shape (3D shape) of a wearing portion of the user who wears the tactile presentation apparatus 11. The sensor unit 27 performs quantification for estimating the wearing state of the tactile presentation apparatus 11, that is, the wearing state of the tactile presentation unit 21, and supplies the result of the quantification to the estimating unit 23.

The storage unit 28 is formed by, for example, a non-volatile memory, and stores various types of data such as the tactile data, perceptual characteristic data, frequency characteristic data, and wearing position data to supply the stored data to each unit of the tactile presentation apparatus 11 via the bus 31.

Note that, the thickness and quality of the material of the vest as the tactile presentation apparatus 11, the hardness of the material of the belt as the tactile presentation apparatus 11, and the like change the ease of conveyance of tactile presentation such as vibrations by the tactile presentation unit 21 to the user. For example, the thickness and hardness of the material are sometimes diverse depending on the series of the tactile presentation apparatuses 11 as products.

Thus, appropriate perceptual characteristic data may be prepared for each series of the tactile presentation apparatuses 11, that is, for each thickness, hardness, and quality of the material of the tactile presentation apparatus 11, and stored in the storage unit 28.

Alternatively, the perceptual characteristic data may be prepared for each thickness, hardness, and quality of the material such that the perceptual characteristic data is acquired from an external apparatus such as a server. In such a case, it is only required to prepare perceptual characteristic data for each model number information indicating the model number of the tactile presentation apparatus 11, according to the thickness, hardness, and quality of the material of the tactile presentation apparatus 11 corresponding to the model number information.

Then, the signal processing unit 51 may acquire the perceptual characteristic data by causing the communication unit 29 to transmit the model number information regarding the tactile presentation apparatus 11 to an external apparatus, and causing the communication unit 29 to receive the perceptual characteristic data transmitted from the external apparatus according to the model number information.

The communication unit 29 communicates with an external server or another tactile presentation apparatus by wireless or wired communication, and for example, transmits data supplied from the tactile presentation control unit 22 or the like, or receives the object position information regarding the target object or the like transmitted from the outside.

The input unit 30 is formed by, for example, a button, a switch, and a touch panel, and supplies a signal according to an operation of the user, that is, an instruction input by the user, to each unit of the tactile presentation apparatus 11.

Note that a part of components, such as the display unit 24, the communication unit 29, and the input unit 30, may not be provided in the tactile presentation apparatus 11.

### <Description of Calibration Process>

Subsequently, specific actions of the tactile presentation apparatus 11 illustrated in Fig. 13 will be described.

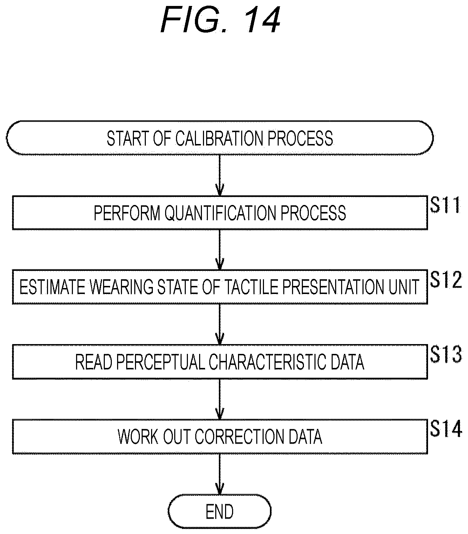

First, the calibration process performed by the tactile presentation apparatus 11 will be described with reference to a flowchart in Fig. 14. This calibration process is started, for example, when the tactile presentation apparatus 11 is worn by a user.

In step S11, the sensor unit 27 performs a quantification process for estimating the wearing state of each tactile presentation unit 21 of the tactile presentation apparatus 11, and supplies the result of the quantification to the estimating unit 23 via the bus 31. Here, as the quantification process by the sensor unit 27, for example, the degree of tightening of the tactile presentation apparatus 11, that is, the length or the like of the belt is quantified, and the 3D shape of a wearing portion of the tactile presentation apparatus 11 on the user's body is quantified.

In step S12, the estimating unit 23 estimates the wearing state of each tactile presentation unit 21.

For example, the estimating unit 23 reads the wearing position data from the storage unit 28 via the bus 31, and estimates the wearing state of each tactile presentation unit 21 on the basis of the read wearing position data and the quantification result obtained in step S11, which has been supplied from the sensor unit 27 via the bus 31. With this step, the actual wearing position of each tactile presentation unit 21 is obtained.

The estimating unit 23 supplies information indicating the actual wearing position of the tactile presentation unit 21 obtained as described above, that is, the estimation result for the wearing state, to the tactile presentation control unit 22 via the bus 31.

Note that, as a result of estimating the wearing state of the tactile presentation unit 21, in a case where the degree of tightening of the tactile presentation apparatus 11 is not sufficient and the wearing state is poor, such as a case where the degree of tightening of the belt as the tactile presentation apparatus 11 is loose, a message prompting the user to firmly tighten the tactile presentation apparatus 11 may be presented.

In such a case, for example, the estimating unit 23 presents a message to the user by supplying a message such as a text message or an image message to the display unit 24 via the bus 31 and causing the display unit 24 to display the supplied message. Note that the method of presenting the message is not restricted to display, and the presentation may be performed using any method such as sound presentation or presentation by, for example, blinking a lamp.

In step S13, the signal processing unit 51 reads the perceptual characteristic data of the user from the storage unit 28 via the bus 31. Note that, at this time, the frequency characteristic data on the tactile presentation unit 21 may also be read from the storage unit 28 by the signal processing unit 51 as necessary.

In step S14, the signal processing unit 51 works out correction data for each tactile presentation unit 21 on the basis of the perceptual characteristic data read in step S13 and the estimation result for the wearing state obtained in step S12, that is, the actual wearing position of each tactile presentation unit 21.

For example, the signal processing unit 51 performs an interpolation process, as necessary, on the basis of the perceptual characteristic data on each part of the user, to work out the perceptual characteristic data of the actual wearing position of each tactile presentation unit 21, that is, the position of the part of the user that actually comes into contact with the tactile presentation unit 21.

Then, the signal processing unit 51 generates correction data indicating correction values of the vibration intensity and the frequency characteristics of the tactile signal in each tactile presentation unit 21 on the basis of the perceptual characteristic data at the actual wearing position of each tactile presentation unit 21. Note that, when the correction data is generated, not only the perceptual characteristic data but also the frequency characteristic data of the tactile presentation unit 21 may be used. Furthermore, the correction data may be any data as long as the data is for obtaining the correction value.

Once the correction data is obtained in this manner, the signal processing unit 51 temporarily holds the obtained correction data, and the calibration process ends.

As described above, the tactile presentation apparatus 11 estimates the wearing state of the tactile presentation unit 21, and generates the correction data on the basis of the result of the estimation and the perceptual characteristic data.

By estimating the wearing state of the tactile presentation unit 21 and generating the correction data in this manner, the tactile presentation as intended can be performed using the estimation result for the wearing state and the correction data. In other words, more accurate tactile presentation can be performed.

Note that, in a case where the correction data is generated according to the user's operation input, the user operates the input unit 30 to input an instruction instructing on adjustment of the vibration intensity and the like of the tactile presentation unit 21.

Subsequent to this, a signal according to the user's instruction is supplied from the input unit 30 to the tactile presentation control unit 22 via the bus 31. Thereafter, the signal processing unit 51 of the tactile presentation control unit 22 generates correction data according to the signal supplied from the input unit 30.

Then, the tactile presentation control unit 22 reads predetermined tactile data defined in advance from the storage unit 28 on the basis of the obtained correction data, and generates a tactile signal on the basis of the read tactile data. Furthermore, the signal processing unit 51 corrects the tactile signal generated by the tactile presentation control unit 22 with the correction data. The tactile presentation control unit 22 supplies the tactile signal corrected in this manner to the tactile presentation unit 21 and vibrates the tactile presentation unit 21 to perform tactile presentation.

When the tactile presentation is performed, the user operates the input unit 30 to input an instruction instructing on adjustment of the vibration intensity and the like such that the correction data is further adjusted, or to input an instruction instructing on the end of the adjustment of the correction data.

At this time, in a case where an instruction instructing on adjustment of the vibration intensity and the like is input, a process in which the signal processing unit 51 adjusts the correction data and performs a tactile presentation based on the tactile signal corrected with the correction data after the adjustment is repeatedly performed until an instruction instructing on the end of the adjustment of the correction data is input. In contrast to this, in a case where an instruction instructing on the end of the adjustment of the correction data is input, the signal processing unit 51 holds the correction data obtained by the process so far as final correction data. In this manner, the correction data may be generated on the basis of the feedback from the user.

### <Description of Presentation Process>

Once the correction data is obtained by the above process, tactile presentation can be performed using the obtained correction data and the estimation result for the wearing state of the tactile presentation unit 21.

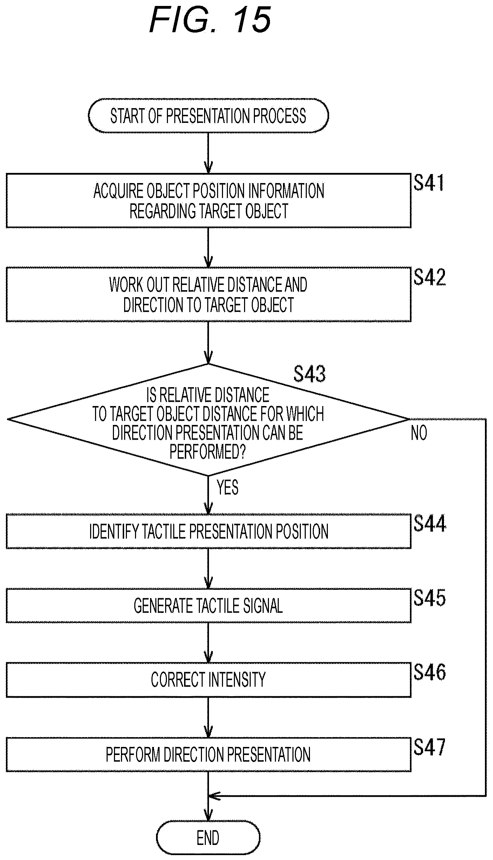

A presentation process by the tactile presentation apparatus 11 will be described below with reference to a flowchart in Fig. 15. Note that this presentation process is started at a timing when the calibration process ends, for example, in a case where the target object is designated in advance.

In step S41, the communication unit 29 communicates with an external server or another tactile presentation apparatus to receive the object position information regarding the target object transmitted from the server or another tactile presentation apparatus, thereby acquiring the object position information. The communication unit 29 supplies the acquired object position information to the position and direction information processing unit 26 via the bus 31.

Furthermore, once the presentation process is started, the position and direction information detection unit 25 performs measurement for finding the position of the tactile presentation apparatus 11 and a direction in which the tactile presentation apparatus 11 is facing in a three-dimensional space at predetermined time intervals, and supplies the results of the measurement sequentially to the position and direction information processing unit 26 via the bus 31 as position and direction information.

In step S42, the position and direction information processing unit 26 works out relative distance and direction to the target object on the basis of the object position information supplied from the communication unit 29 and the position and direction information supplied from the position and direction information detection unit 25 in step S41.

For example, the position and direction information processing unit 26 works out the position of the tactile presentation apparatus 11 and a direction in which the tactile presentation apparatus 11 is facing in a three-dimensional space, on the basis of the position and direction information.

Then, the position and direction information processing unit 26 works out, from the worked-out position and direction of the tactile presentation apparatus 11 and the position of the target object indicated by the object position information, a relative distance to the target object as viewed from the tactile presentation apparatus 11 (user), and a relative direction in which the target object is located as viewed from the tactile presentation apparatus 11.

In step S43, the position and direction information processing unit 26 determines whether or not the relative distance to the target object worked out in step S42 is a distance for which the direction presentation can be performed.

For example, in a case where a distance for which the direction presentation can be performed (hereinafter, referred to as presentable distance) is defined in advance in an application program, it is determined in step S43 that the relative distance to the target object is a distance for which the direction presentation can be performed in a case where the relative distance to the target object is equal to or less than the presentable distance.

In a case where it is determined in step S43 that the relative distance to the target object is not a distance for which the direction presentation can be performed, the direction presentation is not performed to the user for the target object, and the presentation process ends.

Note that, in a case where it is determined that the relative distance to the target object is not a distance for which the direction presentation can be performed, for example, the position and direction information processing unit 26 may generate image data or the like of an image indicating the positional relationship between the user and the target object to perform direction presentation using the image or the like. In this case, the display unit 24 displays an image on the basis of the image data supplied from the position and direction information processing unit 26 via the bus 31, and performs direction presentation.

Furthermore, in this case, when the display unit 24 is not provided in the tactile presentation apparatus 11, the communication unit 29 may transmit the image data or the like to an external instrument such as a smartphone carried by the user such that the external instrument performs direction presentation by displaying an image on the basis of the image data. Besides, the direction presentation is not restricted to the direction presentation by an image, and the direction presentation may be performed by sound or the like.

Moreover, it has been described here that the direction presentation is performed by a method different from the tactile presentation in a case where the distance to the target object is not equal to or less than a certain distance. However, conversely to this, when the distance to the target object is longer than a certain distance, the direction presentation may be performed by tactile presentation, and when the distance to the target object is equal to or less than the certain distance, the direction presentation may be performed by a method different from the tactile presentation, such as image display or sound presentation.

Besides, the direction presentation may be performed by tactile presentation in a case where the distance to the target object is equal to or less than a first distance such that additionally, when the distance to the target object becomes equal to or less than a second distance shorter than the first distance, the direction presentation is switched to direction presentation by another method different from the tactile presentation, or the direction presentation is stopped.

Furthermore, in a case where it is determined in step S43 that the relative distance to the target object is a distance for which the direction presentation can be performed, thereafter the process proceeds to step S44.

In step S44, the position and direction information processing unit 26 identifies the tactile presentation position on the basis of the position and direction of the tactile presentation apparatus 11 and the position of the target object indicated by the object position information.

For example, in the example illustrated in Fig. 4, the position of intersection between the straight line linking the center O and the target object OBJ11 and the own band portion of the tactile presentation apparatus HM21 is worked out as the tactile presentation position PRP11.

The position and direction information processing unit 26 supplies the tactile presentation position information indicating the tactile presentation position obtained in this manner and information indicating the distance from the tactile presentation apparatus 11 to the target object to the tactile presentation control unit 22 via the bus 31. In different terms, the tactile presentation control unit 22 acquires the tactile presentation position information and the information indicating the distance from the tactile presentation apparatus 11 to the target object, from the position and direction information processing unit 26. Hereinafter, the information indicating the distance from the tactile presentation apparatus 11 to the target object will be also particularly referred to as target object distance information.

Note that, in a case where the target object is relatively moving with respect to the tactile presentation apparatus 11, the direction presentation may be performed in consideration of the relative moving speed of the target object as viewed from the tactile presentation apparatus 11. In other words, the tactile presentation position may be identified in consideration of the relative moving speed of the target object.

In such a case, for example, the position and direction information processing unit 26 corrects the position of the target object according to the relative moving speed of the target object as viewed from the tactile presentation apparatus 11. Then, the position and direction information processing unit 26 identifies the tactile presentation position on the basis of the corrected position of the target object and the position and direction of the tactile presentation apparatus 11.

By identifying the tactile presentation position in this manner, the direction of the target object at a timing slightly later than a time point when the object position information regarding the target object is obtained can be presented to the user in step S47 described later. In other words, it is possible to predict the direction of the target object at the timing of the direction presentation on the basis of the relative moving speed, and perform more accurate direction presentation. At this time, the direction of the target object at a timing slightly later than the timing of the direction presentation may be presented in consideration of a time delay until the user recognizes the direction presentation.

In step S45, the tactile presentation control unit 22 generates a tactile signal on the basis of the tactile presentation position information and the target object distance information supplied from the position and direction information processing unit 26, and the tactile data stored in the storage unit 28.

For example, the tactile presentation control unit 22 selects the tactile presentation unit 21 used for the tactile presentation on the basis of the tactile presentation position information and the information indicating the actual wearing position of the tactile presentation unit 21 obtained in step S12 in Fig. 14.

Specifically, for example, in a case where the tactile presentation unit 21 is located at the tactile presentation position, the tactile presentation control unit 22 selects this tactile presentation unit 21 located at the tactile presentation position as the tactile presentation unit 21 used for the tactile presentation. Furthermore, for example, in a case where the tactile presentation unit 21 is not located at the tactile presentation position, the tactile presentation control unit 22 selects two tactile presentation units 21 adjacent to two sides of this tactile presentation position as the tactile presentation units 21 used for the tactile presentation.

Note that, as described earlier, one or a plurality of tactile presentation units 21 located at a position within a predetermined distance from the tactile presentation position may be selected as the tactile presentation units 21 used for the tactile presentation, or one or a plurality of tactile presentation units 21 located at a position closest to the tactile presentation position may be selected as the tactile presentation units 21 used for the tactile presentation.

Upon selecting the tactile presentation unit 21, the tactile presentation control unit 22 reads the tactile data from the storage unit 28 via the bus 31.

Then, the tactile presentation control unit 22 adjusts the amplitude and the vibration frequency of the tactile data on the basis of a distance between the tactile presentation unit 21 selected to be used for the tactile presentation and the tactile presentation position, and the target object distance information indicating the distance to the target object, thereby generating a tactile signal for each tactile presentation unit 21 used for the tactile presentation.

Here, for example, in a case where the number of the selected tactile presentation units 21 is two, as described with reference to Fig. 4, the amplitude of the tactile data (tactile signal) is adjusted according to distances from the tactile presentation units 21 to the tactile presentation position.

Furthermore, for example, when the distance to the target object is presented by tactile presentation, the amplitude and vibration frequency of the tactile data (tactile signal) are adjusted according to the distance from the tactile presentation apparatus 11 to the target object.

Moreover, for example, in a case where the distance to the target object is longer, the resolution of the direction presentation may be modified according to the distance from the tactile presentation apparatus 11 to the target object, for example, by making the resolution of the direction presentation coarser.

Specifically, for example, in a case where the distance to the target object is equal to or greater than a predetermined threshold value, even when the tactile presentation position is located between two tactile presentation units 21, the tactile presentation control unit 22 selects only one tactile presentation unit 21 closer to the tactile presentation position among these two tactile presentation units 21, as the tactile presentation unit 21 used for tactile presentation. In this case, the rough direction of the target object is presented by tactile presentation by one tactile presentation unit 21. That is, the direction presentation is performed at coarser resolution.

In contrast to this, for example, in a case where the distance to the target object is less than the predetermined threshold value, when the tactile presentation position is located between two tactile presentation units 21, the tactile presentation control unit 22 selects these two tactile presentation units 21 as the tactile presentation units 21 used for tactile presentation. In this case, the direction of the target object is more accurately presented by tactile presentation by two tactile presentation units 21. That is, the direction presentation is performed at finer resolution.

In step S46, the signal processing unit 51 corrects the intensity and the like of the tactile signal obtained by the process in step S45 on the basis of the correction data obtained in step S14 in Fig. 14.

Specifically, for example, the vibration intensity (amplitude) and frequency characteristics of the tactile signal are corrected by amounts equivalent to the correction values indicated by the correction data obtained for the tactile presentation unit 21 used for tactile presentation, such that the final tactile signal is given.

The correction data used for correcting the intensity and the like of the tactile signal is obtained on the basis of the perceptual characteristic data indicating the perceptual characteristics (sensitivity characteristics) of the user at the actual wearing position of each tactile presentation unit 21 obtained by estimating the wearing state of the tactile presentation unit 21.

Accordingly, it can be said that driving the tactile presentation unit 21 on the basis of the final tactile signal obtained by the correction based on the correction data is controlling the tactile presentation unit 21 on the basis of the perceptual characteristics (sensitivity characteristics) of the user at the actual wearing position of the tactile presentation unit 21.

In step S47, the tactile presentation control unit 22 performs direction presentation, and the presentation process ends. In other words, the tactile presentation control unit 22 supplies the final tactile signal obtained in step S46 to the tactile presentation unit 21 used for tactile presentation via the bus 31.

On the basis of the tactile signal supplied from the tactile presentation control unit 22, the tactile presentation unit 21 performs tactile presentation for the tactile presentation position to, for example, present a direction in which the target object is located and present a distance to the target object.

Note that, in a case where there is a plurality of target objects, the processes in steps S41 to S47 described above are performed for each of these target objects. Consequently, directions and distances of a plurality of mutually different target objects can be simultaneously presented.

As described above, the tactile presentation apparatus 11 corrects the tactile signal on the basis of the correction data, and performs tactile presentation on the basis of the corrected tactile signal. By configuring in this manner, accurate tactile presentation as intended can be performed.

Moreover, in the above, an example in which the direction presentation is performed by tactile presentation has been described, but the direction presentation may be performed by sound presentation.

In such a case, for example, a sound presentation unit performs direction presentation by an arbitrary sound presentation technology by outputting sound having directivity according to a direction in which the target object is located, or outputting sound such that a sound image is localized in a direction in which the target object is located by a technology such as wavefront synthesis. In other words, by making the sound output by the sound presentation unit be heard from a direction in which the target object is located, direction presentation by sound presentation can be implemented.

### <First Variation of First Embodiment>

### <Configuration Example of Information Processing System>

Note that, in the above, a case where all functions for performing tactile presentation are provided in the tactile presentation apparatus 11 has been described. However, a plurality of apparatuses may perform tactile presentation in cooperation with each other.

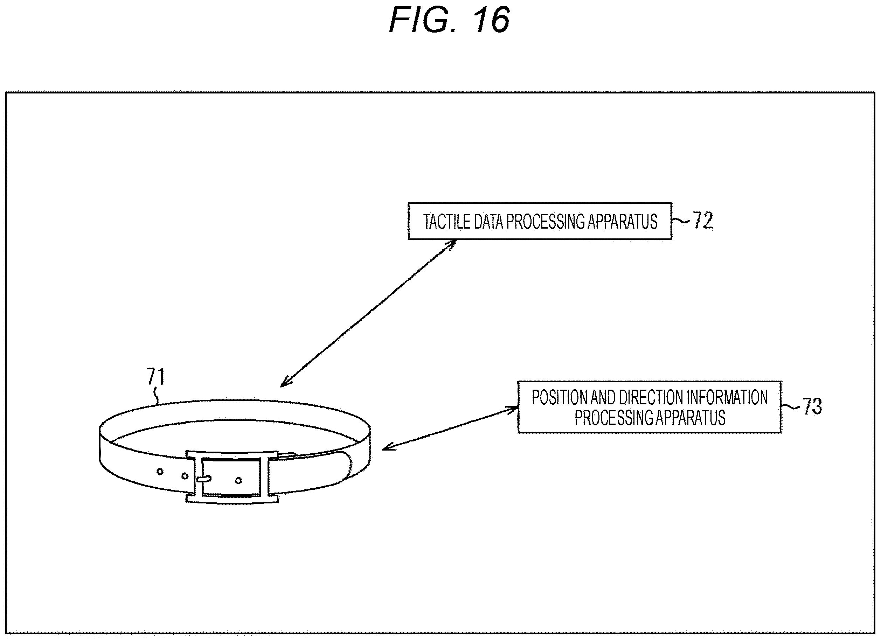

In such a case, an information processing system that performs tactile presentation is configured, for example, as illustrated in Fig. 16. In the example illustrated in Fig. 16, the information processing system includes a tactile presentation apparatus 71, a tactile data processing apparatus 72, and a position and direction information processing apparatus 73.

In this example, the tactile presentation apparatus 71 to the position and direction information processing apparatus 73 communicate with each other via a wired or wireless communication network or the like to exchange various types of data and the like, and the communication scheme between respective apparatuses may be any scheme.

The tactile presentation apparatus 71 includes, for example, the tactile presentation unit 21, the sensor unit 27, the estimating unit 23, the position and direction information detection unit 25, the communication unit 29, and the signal processing unit 51 illustrated in Fig. 13, and for example, transmits the correction data, the tactile presentation position information, and the like to the tactile data processing apparatus 72, and performs tactile presentation on the basis of the tactile signal received from the tactile data processing apparatus 72.

The tactile data processing apparatus 72 is formed by, for example, a personal computer, a smartphone, a server, or the like.

The tactile data processing apparatus 72 generates a tactile signal on the basis of the tactile data stored in the storage unit, the correction data and tactile presentation position information received from the tactile presentation apparatus 71, the target object distance information indicating the distance from the tactile presentation apparatus 71 to the target object, and the like, and transmits the generated tactile signal to the tactile presentation apparatus 71.

The position and direction information processing apparatus 73 is formed by, for example, a personal computer, a smartphone, a server, or the like, and includes, for example, the position and direction information processing unit 26 illustrated in Fig. 13.

The position and direction information processing apparatus 73, for example, works out the position and direction of the tactile presentation apparatus 71 in a three-dimensional space on the basis of the position and direction information received from the tactile presentation apparatus 71, and works out the tactile presentation position on the basis of the object position information regarding the target object and the position and direction of the tactile presentation apparatus 71. Furthermore, the position and direction information processing apparatus 73 transmits the tactile presentation position information and the target object distance information to the tactile presentation apparatus 71.

### <Configuration Example of Computer>

Incidentally, a series of the above-described processes can be executed by hardware as well and also can be executed by software. In a case where the series of the processes is executed by software, a program constituting the software is installed in a computer. Herein, the computer includes a computer built into dedicated hardware, a computer capable of executing various functions when installed with various programs, for example, a general-purpose personal computer, and the like.

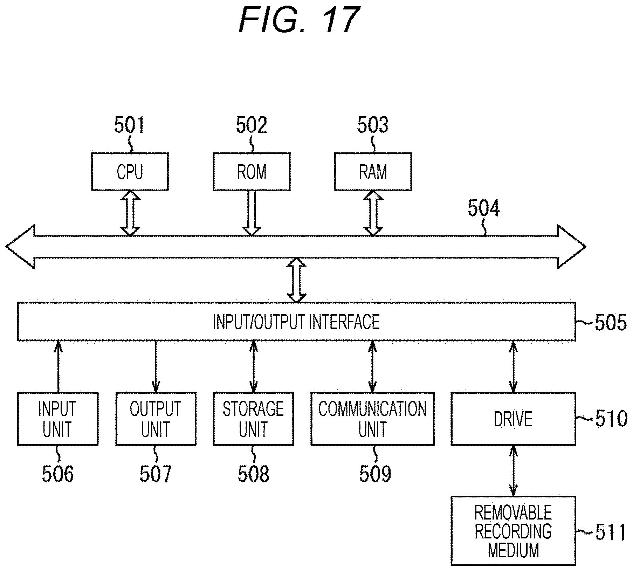

Fig. 17 is a block diagram illustrating a hardware configuration example of a computer that executes the aforementioned series of the processes using a program.

In the computer, a central processing unit (CPU) 501, a read only memory (ROM) 502, and a random access memory (RAM) 503 are interconnected through a bus 504.

Moreover, an input/output interface 505 is connected to the bus 504. An input unit 506, an output unit 507, a storage unit 508, a communication unit 509, and a drive 510 are connected to the input/output interface 505.

The input unit 506 includes a keyboard, a mouse, a microphone, an image pickup element, and the like. The output unit 507 includes a tactile presentation device, a display, a speaker, and the like. The storage unit 508 includes a hard disk, a non-volatile memory, and the like. The communication unit 509 includes a network interface and the like. The drive 510 drives a removable recording medium 511 such as a magnetic disk, an optical disc, a magneto-optical disk, or a semiconductor memory.

In the computer having the configuration as described above, for example, the aforementioned series of the processes is performed in such a manner that the CPU 501 loads a program stored in the storage unit 508 to the RAM 503 via the input/output interface 505 and the bus 504 to execute.

For example, the program executed by the computer (CPU 501) can be provided by being stored in the removable recording medium 511 serving as a package medium or the like. Furthermore, the program can be provided via a wired or wireless transfer medium such as a local area network, the Internet, or digital satellite broadcasting.

In the computer, the program can be installed to the storage unit 508 via the input/output interface 505 by mounting the removable recording medium 511 in the drive 510. Furthermore, the program can be installed to the storage unit 508 via a wired or wireless transfer medium when received by the communication unit 509. As an alternative manner, the program can be installed to the ROM 502 or the storage unit 508 in advance.

Note that, the program executed by the computer may be a program in which the processes are performed along the time series in accordance with the order described in the present description, or alternatively, may be a program in which the processes are performed in parallel or at a necessary timing, for example, when called.

Furthermore, the embodiments according to the present technology are not limited to the aforementioned embodiments and a variety of modifications can be made without departing from the scope of the present technology.

For example, the present technology can employ a cloud computing configuration in which one function is divided and allocated to a plurality of apparatuses so as to be processed in coordination thereamong via a network.

In addition, the respective steps described in the aforementioned flowcharts can be executed by a plurality of apparatuses each taking a share thereof as well as executed by a single apparatus.

Moreover, in a case where a plurality of processes is included in one step, the plurality of processes included in one step can be executed by a plurality of apparatuses each taking a share thereof as well as executed by a single apparatus.

### REFERENCE SIGNS LIST

- 11: Tactile presentation apparatus
- 21-1 to 21-n, 21: Tactile presentation unit
- 22: Tactile presentation control unit
- 23: Estimating unit
- 24: Display unit
- 25: Position and direction information detection unit
- 26: Position and direction information processing unit
- 27: Sensor unit
- 29: Communication unit
- 51: Signal processing unit

## Claims

1. An information processing apparatus (11; HM21; HM41) comprising:
a plurality of tactile presentation devices (21; SV11; SV21; SV61) which are arranged at mutually different positions in a circumferential shape around a circle shaped band portion of a belt and which are in contact with a user's body, when the belt is worn on the user's waist;
wherein the circle shaped band portion of a belt has a center, which is a center position of the information presentation apparatus (O); and
a position and direction information processing unit (26;) that is arranged to determine a position in the three-dimensional space of the information processing apparatus (11; HM21; HM41) and a direction in the three-dimensional space which the information processing apparatus (11; HM21; HM41) is facing; and
an estimating unit (23) that is arranged to estimate an exact position on the band portion of the belt for each of the plurality of tactile presentation devices, that is a wearing state, based on a degree of tightening of the band portion of the belt; and
a communication unit (2 9) that is arranged to receive an object position of a target object (OBJ11); and
wherein the position and direction information processing unit (26) is arranged to determine a tactile presentation position (PRP11) on the band portion of the belt as an intersection between a straight line linking the center position (O) and the object position of the target object (OBJ11) and the band portion of the belt;
a tactile presentation control unit (22) that is arranged to select one or more of the tactile presentation devices (21; SV11; SV21; SV61) among the plurality of tactile presentation devices (21; SV11; SV21; SV61) for a tactile presentation on the basis of the tactile presentation position (PRP11) and the wearing state of the selected one or more tactile presentation device (21; SV11; SV21; SV61).

2. The information processing apparatus (11; HM21; HM41) according to claim 1 , wherein
the tactile presentation control (22) unit is arranged to control the tactile presentation devices (21; SV11; SV21; SV61) on a basis of perceptual characteristics of the user at wearing positions of the tactile presentation devices (21; SV11; SV21; SV61) obtained by estimating the wearing state.

3. The information processing apparatus (11; HM21; HM41) according to any one of claims 1 to 2, wherein
the tactile presentation control unit (22) is arranged to perform tactile presentation for the tactile presentation position by controlling the plurality of tactile presentation devices (21; SV11; SV21; SV61) worn at positions different from the tactile presentation position.

4. The information processing apparatus (11; HM21; HM41) according to claim 3, wherein
the tactile presentation control unit (22) is arranged to perform tactile presentation for the tactile presentation position by controlling the plurality of tactile presentation devices (21; SV11; SV21; SV61) corresponding to the tactile presentation position, according to distances (L1, L2) from the tactile presentation devices to the tactile presentation position.

5. The information processing apparatus (11; HM21; HM41) according to any one of claims 1 to 4, wherein
the tactile presentation control unit is arranged to present a direction by the tactile presentation.

6. The information processing apparatus (11; HM21; HM41) according to claim 5, wherein
the tactile presentation control unit (22) is arranged to perform direction presentation in a horizontal direction by controlling one or more of the plurality of tactile presentation devices (21; SV11; SV21; SV61) among the plurality of tactile presentation devices arranged in a circumferential shape, and/or is arranged to perform direction presentation in a vertical direction by controlling one or more of the plurality of tactile presentation devices (21; SV11; SV21; SV61) among the plurality of tactile presentation devices (21; SV11; SV21; SV61; SV71; SV81) arranged so as to be placed in order in the vertical direction.

7. The information processing apparatus (11; HM21; HM41) according to claim 5 or 6, wherein
the tactile presentation control unit (22) is arranged to simultaneously present a plurality of mutually different directions by performing the tactile presentation for a plurality of the tactile presentation positions.

8. The information processing apparatus (11; HM21; HM41) according to any one of claims 5 to 7, wherein
the tactile presentation position is arranged to indicate a direction in which the target object (OBJ11) is located.

9. The information processing apparatus (11; HM21; HM41)) according to claim 8, wherein
the tactile presentation control unit is arranged to present a distance to the target object (OBJ11) by a magnitude, a cycle, or a presentation pattern of the tactile presentation.

10. The information processing apparatus (11; HM21; HM41) according to claim 9, wherein
the target object (OBJ11) includes another information processing apparatus (11, HM21; HM41) different from the information processing apparatus (11, HM21, HM41)

11. The information processing apparatus (11; HM21; HM41) according to any one of claims 1 to 10, wherein
the tactile presentation control unit (22) is arranged to control the tactile presentation devices (21; SV11; SV21; SV61) such that the tactile presentation is performed by vibration stimulation, temperature stimulation, electrical stimulation, force stimulation, or pain stimulation.

12. An information processing method executed by an information processing apparatus (11; HM21; HM41) according to claims 1-11 , comprising:
determining a position in the three-dimensional space of the information processing apparatus (11; HM21; HM41) and a direction in the three-dimensional space which the information processing apparatus (11; HM21; HM41) is facing;
estimating an exact position on the band portion of the belt for each of the plurality of tactile presentation devices (21; SV11; SV21; SV61), that is a wearing state, based on a degree of tightening of the band portion of the belt;
wherein the plurality of tactile presentation devices (21; SV11; SV21; SV61) is arranged at mutually different positions in the circumferential shape around the circle shaped band portion of the belt; wherein the circle shaped band portion of the belt has a center which is the center position of the information processing apparatus (O); receiving an object position of a target object (OBJ11); and
determining a tactile presentation position (PRP11) on the band portion of the belt as an intersection between a straight line linking the center position (O) and the object position of the target object (OBJ11) and the band portion of the belt; and
selecting one or more of the tactile presentation devices (21; SV11; SV21; SV61) among the plurality of tactile presentation devices for a tactile presentation on the basis of the tactile presentation position (PRP11) and the wearing state of the selected one or more tactile presentation device (21; SV11; SV21; SV61).

13. A computer program, which when executed on an information processing apparatus (11, HM21; HM41) according to claims 1-11 causes the information processing apparatus to perform a method comprising: a step of determining a position in the three-dimensional space of the information processing apparatus (11; HM21; HM41) and a direction in the three-dimensional space which the information processing apparatus (11; HM21; HM41) is facing;
a step of estimating an exact position on the band portion of the belt for each of the plurality of tactile presentation devices (21; SV11; SV21; SV61), that is a wearing state, based on a degree of tightening of the band portion of the belt; and
wherein the plurality of tactile presentation devices (21; SV11; SV21; SV61) is arranged at mutually different positions in a circumferential shape around the circle shaped band portion of the belt; wherein the circle shaped band portion of the belt has a center which is the center position of the information processing apparatus (O);
a step of receiving an object position of a target object (OBJ11); and
a step of determining a tactile presentation position (PRP11) on the band portion of the belt as an intersection between a straight line linking the center position (O) and the object position of the target object (OBJ11) and the band portion of the belt; and
a step of selecting one or more of the tactile presentation devices among the plurality of tactile presentation devices (21; SV11; SV21; SV61) for a tactile presentation on the basis of the tactile presentation position (PRP11) and the wearing state of the selected one or more tactile presentation device (21; SV11; SV21; SV61).

## Patentansprüche

1. Informationsverarbeitungsvorrichtung (11; HM21; HM41), aufweisend:
mehrere taktile Darstellungsgeräte (21; S11; SV21; SV61), die in voneinander verschiedenen Positionen in einer Umfangsform um einen kreisförmigen Bandabschnitt eines Gürtels angeordnet sind und die mit dem Körper eines Benutzers in Kontakt sind, wenn der Gürtel um die Taille des Benutzers getragen wird;
wobei der kreisförmige Bandabschnitt eines Gürtels einen Mittelpunkt aufweist, der eine Mittenposition der Informationsdarstellungsvorrichtung (O) ist; und
eine Positions- und Richtungsinformationsverarbeitungseinheit (26), die so ausgelegt ist, dass sie eine Position im dreidimensionalen Raum der Informationsverarbeitungsvorrichtung (11; HM21; HM41) und eine Richtung im dreidimensionalen Raum bestimmt, in die die Informationsverarbeitungsvorrichtung (11; HM21; HM41) zeigt; und
eine Schätzeinheit (23), die so ausgelegt ist, dass sie eine exakte Position auf dem Bandabschnitt des Gürtels für jedes der mehreren taktilen Darstellungsgeräte, das heißt eines Tragezustands, basierend auf einem Grad des Festschnallens des Bandabschnitts des Gürtels schätzt; und
eine Kommunikationseinheit (29), die zum Empfangen einer Objektposition eines Zielobjekts (OBJ11) ausgelegt ist; und
wobei die Positions- und Richtungsinformationsverarbeitungseinheit (26) so ausgelegt ist, dass sie eine taktile Darstellungsposition (PRP11) auf dem Bandabschnitt des Gürtels als einen Schnittpunkt zwischen einer geraden Linie, die die Mittenposition (O) und die Objektposition des Zielobjekts (OB11) verbindet, und dem Bandabschnitt des Gürtels bestimmt;
eine Einheit zur Steuerung taktiler Darstellung (22), die so ausgelegt ist, das sie eines oder mehrere der taktilen Darstellungsgeräte (21; S11; SV21; SV61) unter den mehreren taktilen Darstellungsgeräten (21; S11; SV21; SV61) für eine taktile Darstellung auf der Basis der taktilen Darstellungsposition (PRP11) und des Tragezustands des einen oder mehreren ausgewählten taktilen Darstellungsgeräte (21; S11; SV21; SV61) auswählt.

2. Informationsverarbeitungsvorrichtung (11; HM21; HM41) nach Anspruch 1, wobei
die Einheit zur Steuerung taktiler Darstellung (22) so ausgelegt ist, dass sie die taktilen Darstellungsgeräte (21; S11; SV21; SV61) auf einer Basis von Wahrnehmungscharakteristiken des Benutzers in Tragepositionen der taktilen Darstellungsgeräte (21; S11; SV21; SV61) steuert, die durch Schätzen des Tragezustands erhalten werden.

3. Informationsverarbeitungsvorrichtung (11; HM21; HM41) nach einem der Ansprüche 1 bis 2, wobei
die Einheit zur Steuerung taktiler Darstellung (22) so ausgelegt ist, dass sie taktile Darstellung für die taktile Darstellungsposition durch Steuern der mehreren taktilen Darstellungsgeräte (21; S11; SV21; SV61) durchführt, die in Positionen getragen werden, die von der taktilen Darstellungsposition verschieden sind.

4. Informationsverarbeitungsvorrichtung (11; HM21; HM41) nach Anspruch 3, wobei
die Einheit zur Steuerung taktiler Darstellung (22) so ausgelegt ist, dass sie taktile Darstellung für die taktile Darstellungsposition durch Steuern der mehreren taktilen Darstellungsgeräte (21; S11; SV21; SV61), die der taktilen Darstellungsposition entsprechen, gemäß Abständen (L1, L2) von den taktilen Darstellungsgeräten zur taktilen Darstellungsposition durchführt.

5. Informationsverarbeitungsvorrichtung (11; HM21; HM41) nach einem der Ansprüche 1 bis 4, wobei
die Einheit zur Steuerung taktiler Darstellung zum Darstellen einer Richtung durch die taktile Darstellung ausgelegt ist.

6. Informationsverarbeitungsvorrichtung (11; HM21; HM41) nach Anspruch 5, wobei
die Einheit zur Steuerung taktiler Darstellung (22) so ausgelegt ist, dass sie Richtungsdarstellung in einer horizontalen Richtung durch Steuern eines oder mehrerer der mehreren taktilen Darstellungsgeräte (21; S11; SV21; SV61) unter den mehreren taktilen Darstellungsgeräten durchführt, die in einer Umfangsform angeordnet sind, und/oder so ausgelegt ist, dass sie Richtungsdarstellung in einer vertikalen Richtung durch Steuern eines oder mehrerer der mehreren taktilen Darstellungsgeräte (21; S11; SV21; SV61) unter den mehreren taktilen Darstellungsgeräten (21; S11; SV21; SV61; SV71; SV81) durchführt, die so angeordnet sind, dass sie der Reihe nach in der vertikalen Richtung platziert sind.

7. Informationsverarbeitungsvorrichtung (11; HM21; HM41) nach Anspruch 5 oder 6, wobei
die Einheit zur Steuerung taktiler Darstellung (22) so ausgelegt ist, dass sie mehrere voneinander verschiedene Richtungen durch Durchführen der taktilen Darstellung für mehrere der taktilen Darstellungspositionen simultan darstellt.

8. Informationsverarbeitungsvorrichtung (11; HM21; HM41) nach einem der Ansprüche 5 bis 7, wobei
die taktile Darstellungsposition so ausgelegt ist, das sie eine Richtung anzeigt, in der sich das Zielobjekt (OBJ11) befindet.

9. Informationsverarbeitungsvorrichtung (11; HM21; HM41) nach Anspruch 8, wobei
die Einheit zur Steuerung taktiler Darstellung so ausgelegt ist, dass sie einen Abstand zum Zielobjekt (OBJ11) durch eine Größenordnung, einen Kreis oder ein Darstellungsmuster der taktilen Darstellung darstellt.

10. Informationsverarbeitungsvorrichtung (11; HM21; HM41) nach Anspruch 9, wobei
das Zielobjekt (OBJ11) eine andere Informationsverarbeitungsvorrichtung (11, HM21; HM41) aufweist, die von der Informationsverarbeitungsvorrichtung (11, HM21, HM41) verschieden ist.

11. Informationsverarbeitungsvorrichtung (11; HM21; HM41) nach einem der Ansprüche 1 bis 10, wobei
die Einheit zur Steuerung taktiler Darstellung (22) so ausgelegt ist, dass sie die taktilen Darstellungsgeräte (21; S11; SV21; SV61) derart steuert, dass die taktile Darstellung durch Vibrationssimulation, Temperatursimulation, elektrische Simulation, Kraftsimulation oder Schmerzsimulation durchgeführt wird.

12. Informationsverarbeitungsverfahren, das von einer Informationsverarbeitungsvorrichtung (11; HM21; HM41) nach Anspruch 1 bis 11 ausgeführt wird und aufweist:
Bestimmen einer Position im dreidimensionalen Raum der Informationsverarbeitungsvorrichtung (11; HM21; HM41) und einer Richtung im dreidimensionalen Raum, in die die Informationsverarbeitungsvorrichtung (11; HM21; HM41) zeigt; und
Schätzen einer exakten Position auf dem Bandabschnitt des Gürtels für jedes der mehreren taktilen Darstellungsgeräte (21; S11; SV21; SV61), das heißt eines Tragezustands, basierend auf einem Grad des Festschnallens des Bandabschnitts des Gürtels; und
wobei die mehreren taktilen Darstellungsgeräte (21; S11; SV21; SV61) in voneinander verschiedenen Positionen in einer Umfangsform um den kreisförmigen Bandabschnitt des Gürtels angeordnet sind; wobei der kreisförmige Bandabschnitt des Gürtels einen Mittelpunkt aufweist, der eine Mittenposition der Informationsdarstellungsvorrichtung (O) ist;
Empfangen einer Objektposition eines Zielobjekts (OBJ11); und
Bestimmen einer taktilen Darstellungsposition (PRP11) auf dem Bandabschnitt des Gürtels als einen Schnittpunkt zwischen einer geraden Linie, die die Mittenposition (O) und die Objektposition des Zielobjekts (OB11) verbindet, und dem Bandabschnitt des Gürtels;
Auswählen eines oder mehrerer der taktilen Darstellungsgeräte (21; S11; SV21; SV61) unter den mehreren taktilen Darstellungsgeräten für eine taktile Darstellung auf der Basis der taktilen Darstellungsposition (PRP11) und des Tragezustands des einen oder mehreren ausgewählten taktilen Darstellungsgeräte (21; S11; SV21; SV61.

13. Computerprogramm, das bei Ausführung auf einer Informationsverarbeitungsvorrichtung (11, HM21; HM41) nach Anspruch 1 bis 11 die Informationsverarbeitungsvorrichtung zum Durchführen eines Verfahrens veranlasst, das aufweist:
einen Schritt des Bestimmens einer Position im dreidimensionalen Raum der Informationsverarbeitungsvorrichtung (11; HM21; HM41) und einer Richtung im dreidimensionalen Raum, in die die Informationsverarbeitungsvorrichtung (11; HM21; HM41) zeigt; und
einen Schritt des Schätzens einer exakten Position auf dem Bandabschnitt des Gürtels für jedes der mehreren taktilen Darstellungsgeräte (21; S11; SV21; SV61), das heißt eines Tragezustands, basierend auf einem Grad des Festschnallens des Bandabschnitts des Gürtels; und
wobei die mehreren taktilen Darstellungsgeräte (21; S11; SV21; SV61) in voneinander verschiedenen Positionen in einer Umfangsform um den kreisförmigen Bandabschnitt des Gürtels angeordnet sind; wobei der kreisförmige Bandabschnitt des Gürtels einen Mittelpunkt aufweist, der eine Mittenposition der Informationsdarstellungsvorrichtung (O) ist;
einen Schritt des Empfangens einer Objektposition eines Zielobjekts (OBJ11); und
einen Schritt des Bestimmens einer taktilen Darstellungsposition (PRP11) auf dem Bandabschnitt des Gürtels als einen Schnittpunkt zwischen einer geraden Linie, die die Mittenposition (O) und die Objektposition des Zielobjekts (OB11) verbindet, und dem Bandabschnitt des Gürtels; und
einen Schritt des Auswählens eines oder mehrerer der taktilen Darstellungsgeräte unter den mehreren taktilen Darstellungsgeräten (21; S11; SV21; SV61) für eine taktile Darstellung auf der Basis der taktilen Darstellungsposition (PRP11) und des Tragezustands des einen oder mehreren ausgewählten taktilen Darstellungsgeräte (21; 511; SV21; SV61).

## Revendications

1. Appareil de traitement d'informations (11 ; HM21 ; HM41) comprenant :
une pluralité de dispositifs de présentation tactiles (21 ; SV11 ; SV21 ; SV61) qui sont disposés à des positions mutuellement différentes dans une forme circonférentielle autour d'une partie de bande en forme de cercle d'une ceinture et qui sont en contact avec le corps d'un utilisateur lorsque la ceinture est portée sur la taille de l'utilisateur ;
où la partie de bande en forme de cercle d'une ceinture a un centre, qui est une position centrale de l'appareil de présentation d'informations (O) ; et
une unité de traitement d'informations de position et de direction (26) qui est agencée pour déterminer une position dans l'espace tridimensionnel de l'appareil de traitement d'informations (11 ; HM21 ; HM41) et une direction dans l'espace tridimensionnel à laquelle l'appareil de traitement d'informations (11 ; HM21 ; HM41) fait face ; et
une unité d'estimation (23) qui est agencée pour estimer une position exacte sur la partie de bande de la ceinture pour chacun de la pluralité de dispositifs de présentation tactiles, c'est-à-dire un état de port, sur la base d'un degré de serrage de la partie de bande de la ceinture ; et
une unité de communication (29) qui est agencée pour recevoir une position d'objet d'un objet cible (OBJ11) ; et
où l'unité de traitement d'informations de position et de direction (26) est agencée pour déterminer une position de présentation tactile (PRP11) sur la partie de bande de la ceinture en tant qu'intersection entre une ligne droite reliant la position centrale (O) et la position d'objet de l'objet cible (OBJ11) et la partie de bande de la ceinture ;
une unité de commande de présentation tactile (22) qui est agencée pour sélectionner un ou plusieurs des dispositifs de présentation tactiles (21 ; SV11 ; SV21 ; SV61) parmi la pluralité de dispositifs de présentation tactiles (21 ; SV11 ; SV21 ; SV61) pour une présentation tactile sur la base de la position de présentation tactile (PRP11) et de l'état de port des un ou plusieurs dispositifs de présentation tactiles sélectionnés (21 ; SV11 ; SV21 ; SV61).

2. Appareil de traitement d'informations (11 ; HM21 ; HM41) selon la revendication 1, dans lequel :
l'unité de commande de présentation tactile (22) est agencée pour commander les dispositifs de présentation tactiles (21 ; SV11 ; SV21 ; SV61) sur la base de caractéristiques de perception de l'utilisateur aux positions de port des dispositifs de présentation tactiles (21 ; SV11 ; SV21 ; SV61) obtenues par l'estimation de l'état de port.

3. Appareil de traitement d'informations (11 ; HM21 ; HM41) selon l'une quelconque des revendications 1 à 2, dans lequel :
l'unité de commande de présentation tactile (22) est agencée pour effectuer une présentation tactile pour la position de présentation tactile en commandant la pluralité de dispositifs de présentation tactiles (21 ; SV11 ; SV21 ; SV61) portés à des positions différentes de la position de présentation tactile.

4. Appareil de traitement d'informations (11 ; HM21 ; HM41) selon la revendication 3, dans lequel :
l'unité de commande de présentation tactile (22) est agencée pour effectuer une présentation tactile pour la position de présentation tactile en commandant la pluralité de dispositifs de présentation tactiles (21 ; SV11 ; SV21 ; SV61) correspondant à la position de présentation tactile, selon des distances (L1, L2) entre les dispositifs de présentation tactiles et la position de présentation tactile.

5. Appareil de traitement d'informations (11 ; HM21 ; HM41) selon l'une quelconque des revendications 1 à 4, dans lequel :
l'unité de commande de présentation tactile est agencée pour présenter une direction par la présentation tactile.

6. Appareil de traitement d'informations (11 ; HM21 ; HM41) selon la revendication 5, dans lequel :
l'unité de commande de présentation tactile (22) est agencée pour effectuer une présentation de direction dans une direction horizontale en commandant un ou plusieurs de la pluralité de dispositifs de présentation tactiles (21 ; SV11 ; SV21 ; SV61) parmi la pluralité de dispositifs de présentation tactiles agencés dans une forme circonférentielle, et/ou est agencée pour effectuer une présentation de direction dans une direction verticale en commandant un ou plusieurs de la pluralité de dispositifs de présentation tactiles (21 ; SV11 ; SV21 ; SV61) parmi la pluralité de dispositifs de présentation tactiles (21 ; SV11 ; SV21 ; SV61 ; SV71 ; SV81) agencés de manière à être placés en ordre dans la direction verticale.

7. Appareil de traitement d'informations (11 ; HM21 ; HM41) selon la revendication 5 ou la revendication 6, dans lequel :
l'unité de commande de présentation tactile (22) est agencée pour présenter simultanément une pluralité de directions mutuellement différentes en effectuant la présentation tactile pour une pluralité des positions de présentation tactiles.

8. Appareil de traitement d'informations (11 ; HM21 ; HM41) selon l'une quelconque des revendications 5 à 7, dans lequel :
la position de présentation tactile est agencée pour indiquer une direction dans laquelle l'objet cible (OBJ11) est situé.

9. Appareil de traitement d'informations (11 ; HM21 ; HM41) selon la revendication 8, dans lequel :
l'unité de commande de présentation tactile est agencée pour présenter une distance à l'objet cible (OBJ11) par une magnitude, un cycle ou un modèle de présentation de la présentation tactile.

10. Appareil de traitement d'informations (11 ; HM21 ; HM41) selon la revendication 9, dans lequel :
l'objet cible (OBJ11) comprend un autre appareil de traitement d'informations (11, HM21 ; HM41) différent de l'appareil de traitement d'informations (11, HM21 ; HM41) .

11. Appareil de traitement d'informations (11 ; HM21 ; HM41) selon l'une quelconque des revendications 1 à 10, dans lequel :
l'unité de commande de présentation tactile (22) est agencée pour commander les dispositifs de présentation tactiles (21 ; SV11 ; SV21 ; SV61) de sorte que la présentation tactile soit effectuée par une stimulation par vibration, une stimulation par la température, une stimulation électrique, une stimulation par une force ou une stimulation par une douleur.

12. Procédé de traitement d'informations exécuté par un appareil de traitement d'informations (11 ; HM21 ; HM41) selon les revendications 1 à 11, comprenant les étapes suivantes :
déterminer une position dans l'espace tridimensionnel de l'appareil de traitement d'informations (11 ; HM21 ; HM41) et une direction dans l'espace tridimensionnel à laquelle l'appareil de traitement d'informations (11 ; HM21 ; HM41) fait face ;
estimer une position exacte sur la partie de bande de la ceinture pour chacun de la pluralité de dispositifs de présentation tactiles (21 ; SV11 ; SV21 ; SV61), à savoir un état de port, sur la base d'un degré de serrage de la partie de bande de la ceinture ;
où la pluralité de dispositifs de présentation tactiles (21 ; SV11 ; SV21 ; SV61) sont agencés à des positions mutuellement différentes dans la forme circonférentielle autour de la partie de bande en forme de cercle de la ceinture ;
où la partie de bande en forme de cercle de la ceinture a un centre qui est la position centrale de l'appareil de traitement d'informations (O) recevant une position d'objet d'un objet cible (OBJ11) ; et
déterminer une position de présentation tactile (PRP11) sur la partie de bande de la ceinture en tant qu'intersection entre une ligne droite reliant la position centrale (O) et la position d'objet de l'objet cible (OBJ11) et la partie de bande de la ceinture ; et sélectionner un ou plusieurs des dispositifs de présentation tactiles (21 ; SV11 ; SV21 ; SV61) parmi la pluralité de dispositifs de présentation tactiles pour une présentation tactile sur la base de la position de présentation tactile (PRP11) et de l'état de port des un ou plusieurs dispositifs de présentation tactiles sélectionnés (21 ; SV11 ; SV21 ; SV61).

13. Programme informatique qui, lorsqu'il est exécuté sur un appareil de traitement d'informations (11, HM21 ; HM41) selon les revendications 1 à 11, amène l'appareil de traitement d'informations à exécuter un procédé comprenant :
une étape de détermination d'une position dans l'espace tridimensionnel de l'appareil de traitement d'informations (11 ; HM21 ; HM41) et d'une direction dans l'espace tridimensionnel à laquelle l'appareil de traitement d'informations (11 ; HM21 ; HM41) fait face ; une étape d'estimation d'une position exacte sur la partie de bande de la ceinture pour chacun de la pluralité de dispositifs de présentation tactiles (21 ; SV11 ; SV21 ; SV61), à savoir un état de port, sur la base d'un degré de serrage de la partie de bande de la ceinture ; et
où la pluralité de dispositifs de présentation tactiles (21 ; SV11 ; SV21 ; SV61) est disposée à des positions mutuellement différentes dans une forme circonférentielle autour de la partie de bande en forme de cercle de la ceinture ;
où la partie de bande en forme de cercle de la ceinture a un centre qui est la position centrale de l'appareil de traitement d'informations (O) ;
une étape de réception d'une position d'objet d'un objet cible (OBJ11) ; et
une étape de détermination d'une position de présentation tactile (PRP11) sur la partie de bande de la ceinture en tant qu'intersection entre une ligne droite reliant la position centrale (O) et la position de l'objet cible (OBJ11) et la partie de bande de la ceinture ; et
une étape de sélection d'un ou plusieurs des dispositifs de présentation tactiles parmi la pluralité de dispositifs de présentation tactiles (21 ; SV11 ; SV21 ; SV61) pour une présentation tactile sur la base de la position de présentation tactile (PRP11) et de l'état de port des un ou plusieurs dispositifs de présentation tactiles sélectionnés (21 ; SV11 ; SV21 ; SV61).
